(19) **Europäisches Patentamt**
**European Patent Office**
**Office européen des brevets**

(11) **EP 3 901 652 A1**

(12) **EUROPEAN PATENT APPLICATION**
published in accordance with Art. 153(4) EPC

(43) Date of publication:
27.10.2021 Bulletin 2021/43

(51) Int Cl.:
*G01S 7/40* (2006.01)　　　　*G01S 13/86* (2006.01)
*G01S 13/87* (2006.01)　　　　*G01S 13/93* (2020.01)

(21) Application number: 19899989.8

(22) Date of filing: 10.10.2019

(86) International application number:
PCT/JP2019/039994

(87) International publication number:
WO 2020/129369 (25.06.2020 Gazette 2020/26)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 17.12.2018 JP 2018235268

(71) Applicant: **Sony Semiconductor Solutions
Corporation
Atsugi-shi, Kanagawa 243-0014 (JP)**

(72) Inventor: **YAMAMOTO, Hideaki
Atsugi-shi, Kanagawa 243-0014 (JP)**

(74) Representative: **Witte, Weller & Partner
Patentanwälte mbB
Postfach 10 54 62
70047 Stuttgart (DE)**

(54) **CALIBRATION DEVICE, CALIBRATION METHOD, PROGRAM, CALIBRATION SYSTEM, AND CALIBRATION TARGET**

(57)　A calibration unit 60 acquires detection signals each generated by one of a plurality of sensors in a sensor unit 40 and indicating detection results of a calibration target. A state detection unit 61 detects a state of the calibration target by using the detection signals. A time difference correction amount setting unit 65 calculates a time difference between the detection signals each generated by one of the sensors of the sensor unit 40 by using state detection results of the calibration target obtained by the state detection unit 61, and sets a time difference correction amount on the basis of a calculation result. Temporal misalignment between pieces of information acquired by the plurality of sensors of the sensor unit 40 can be corrected on the basis of the time difference correction amount set by the time difference correction amount setting unit 65.

*FIG. 1*

**Description**

TECHNICAL FIELD

This technology relates to a calibration apparatus, a calibration method, a program, and a calibration system and a calibration target, and corrects temporal misalignment in information acquired by using a plurality of sensors in an information processing apparatus.

BACKGROUND ART

It has been conventionally proposed to perform an object recognition process and the like with high accuracy by using information obtained with the use of a plurality of types of sensors. For example, Patent Document 1 describes that, when a radar and a camera are used as sensors to detect a calibration target and results of the detection are used to perform driving assistance and the like, the coordinates of the calibration target obtained from the radar and the coordinates of the calibration target obtained from the camera are used to easily perform matching of the calibration targets.

CITATION LIST

PATENT DOCUMENT

Patent Document 1: Japanese Patent Application Laid-Open No. 2007-218738

SUMMARY OF THE INVENTION

PROBLEMS TO BE SOLVED BY THE INVENTION

By the way, detection results from a plurality of sensors may include temporal misalignment as well as spatial misalignment. Therefore, in a case where there is temporal misalignment between the detection results, it is not possible to accurately correct the spatial misalignment and the like on the basis of the detection results from the sensors.
Therefore, it is an object of this technology to provide a calibration apparatus, a calibration method, a program, and a calibration system and a calibration target capable of correcting temporal misalignment between detection results acquired by a plurality of sensors.

SOLUTIONS TO PROBLEMS

A first aspect of this technology is:
a calibration apparatus including:

a state detection unit that detects a state of a calibration target by using detection signals each generated by one of a plurality of sensors and indicating detection results of the calibration target; and
a time difference correction amount setting unit that calculates a time difference between the detection signals each generated by one of the sensors by using state detection results of the calibration target obtained by the state detection unit, and sets a time difference correction amount on the basis of a calculation result.

In this technology, a state of a calibration target is detected by a state detection unit by using detection signals each generated by one of a plurality of sensors and indicating detection results of the calibration target, for example, an active sensor and a passive sensor, or a plurality of active sensors. A radar and/or a lidar is used as the active sensor. A time difference correction amount setting unit calculates a time difference between the detection signals each generated by one of the sensors by using state detection results of the calibration target obtained by the state detection unit. Specifically, with the use of any one of the detection signals each generated by one of a plurality of sensors as reference, the time difference correction amount setting unit calculates a time difference with respect to the detection signal as reference by using state detection results of respective frames of the detection signal. For example, the time difference correction amount setting unit calculates, by using the state detection results, a difference in frame numbers when there occurs an equal change in the state of the calibration target, and defines the difference as the time difference. Furthermore, a synchronization processing unit is further included which corrects, by using a time difference correction amount, a time difference in a detection signal for which the time difference has been calculated. For example, the time difference indicates the difference in the frame numbers when there occurs an equal change in the state of the calibration target, and the synchronization processing unit outputs the detection signal corrected with the time difference correction amount with frame numbers thereof matched with those of the detection signal as reference. Furthermore, the detection signals each generated by one of the plurality of sensors may indicate detection results when states of the calibration target are randomly switched, not limited to the case of indicating detection results when the states of the calibration target are switched in a predetermined period.
A second aspect of this technology is:
a calibration method including:

detecting a state of a calibration target by a state detection unit by using detection signals each generated by one of a plurality of sensors and indicating detection results of the calibration target; and
calculating a time difference between the detection signals each generated by one of the sensors by using state detection results of the calibration target obtained by the state detection unit, and setting a time difference correction amount by a time difference correction amount setting on the basis of a calculation result.

A third aspect of this technology is:
a program that causes a computer to execute calibration of detection signals each generated by one of a plurality of sensors and indicating detection results of a calibration target, the program causing the computer to execute:

a procedure for detecting a state of the calibration target by using the detection signals; and
a procedure for calculating a time difference between the detection signals each generated by one of the sensors on the basis of state detection results of the calibration target, and setting a time difference correction amount on the basis of a calculation result.

Note that the program of the present technology is a program which can be provided by, for example, a storage medium or a communication medium which provides a general-purpose computer capable of executing various programs with a program in a computer-readable format, for example, a storage medium such as an optical disk, a magnetic disk, or a semiconductor memory, or a communication medium such as a network. By providing such a program in a computer-readable format, a process in accordance with the program is realized on the computer.

A fourth aspect of this technology is:
a calibration system including:

a sensor unit that generates detection signals each generated by one of a plurality of sensors and indicating detection results of a calibration target;
a state detection unit that detects a state of the calibration target by using the detection signals of respective sensors generated by the sensor unit;
a time difference correction amount setting unit that calculates a time difference between the detection signals each generated by one of the sensors by using state detection results of the calibration target obtained by the state detection unit, and sets a time difference correction amount on the basis of a calculation result; and
a synchronization processing unit that corrects the time difference between the detection signals by using the time difference correction amount set by the time difference correction amount setting unit.

A fifth aspect of this technology is:
a calibration target including:
a characteristic switching unit capable of performing switching to a different reflection characteristic state.
In this technology, an antireflection portion is movably provided at a front surface of a target having a predetermined reflection characteristic, and is moved in a predetermined period or a random period, or antireflection portions are each movably provided at a front surface of one of a plurality of targets having different reflection characteristics, one target of which the antireflection portion has been moved from the front surface thereof is selected, and the target to be selected is switched in a predetermined period or randomly. Furthermore, by providing a plurality of targets having different reflection characteristics in a rotation direction of a rotating body, and rotating the rotating body, it is possible to perform switching between the targets in a predetermined period, and to perform switching to a different reflection characteristic state in a predetermined period. Furthermore, an indicator which indicates state information indicating a state of the reflection characteristic may be provided.

BRIEF DESCRIPTION OF DRAWINGS

Fig. 1 is a diagram illustrating a configuration of a calibration system.
Fig. 2 is a diagram illustrating a configuration of a calibration unit.
Fig. 3 is a flowchart exemplifying an operation of the calibration unit.
Fig. 4 is a diagram exemplifying a configuration of an information processing apparatus in a first embodiment.
Fig. 5 is a flowchart exemplifying a detection signal acquisition process in the first embodiment.
Fig. 6 is a flowchart exemplifying a time difference correction amount setting process in the first embodiment.
Fig. 7 is a diagram illustrating a first operation example in the first embodiment.
Fig. 8 is a diagram illustrating a second operation example in the first embodiment.
Fig. 9 is a diagram illustrating the second operation example after calibration.
Fig. 10 is a diagram illustrating a third operation example in the first embodiment.
Fig. 11 is a diagram illustrating a fourth operation example in the first embodiment.
Fig. 12 is a diagram illustrating the fourth operation example after calibration.
Fig. 13 is a diagram illustrating a fifth operation example in the first embodiment.
Fig. 14 is a diagram illustrating a configuration of a second embodiment.
Fig. 15 is a diagram illustrating a first operation example in the second embodiment.
Fig. 16 is a diagram illustrating a second operation example in the second embodiment.
Fig. 17 is a diagram illustrating the second operation example after calibration.
Fig. 18 is a diagram illustrating a third operation example in the second embodiment.
Fig. 19 is a diagram illustrating a fourth operation example in the second embodiment.
Fig. 20 is a diagram illustrating the fourth operation example after calibration.

Fig. 21 is a diagram exemplifying a configuration of an information processing apparatus in a third embodiment.

Fig. 22 is a flowchart exemplifying a time difference correction amount setting process in the third embodiment.

Fig. 23 is a diagram illustrating a first operation example in the third embodiment.

Fig. 24 is a diagram illustrating a second operation example in the third embodiment.

Fig. 25 is a diagram illustrating the second operation example after calibration.

Fig. 26 is a perspective view illustrating another configuration of a calibration target.

Fig. 27 is a set of a front view and a top view of the other configuration of the calibration target.

Fig. 28 is a diagram exemplifying a case where a time difference is equal to or longer than a state switching period of the calibration target.

Fig. 29 is a block diagram illustrating an example of a schematic configuration of a vehicle control system.

Fig. 30 is a diagram exemplifying the arrangement of the calibration target.

MODE FOR CARRYING OUT THE INVENTION

Hereinafter, modes for carrying out the present technology will be described. Note that the descriptions will be given in the following order.

1. About Calibration System
2. First Embodiment
3. Second Embodiment
4. Third Embodiment
5. Modifications
6. Exemplary Applications

<1. About Calibration System>

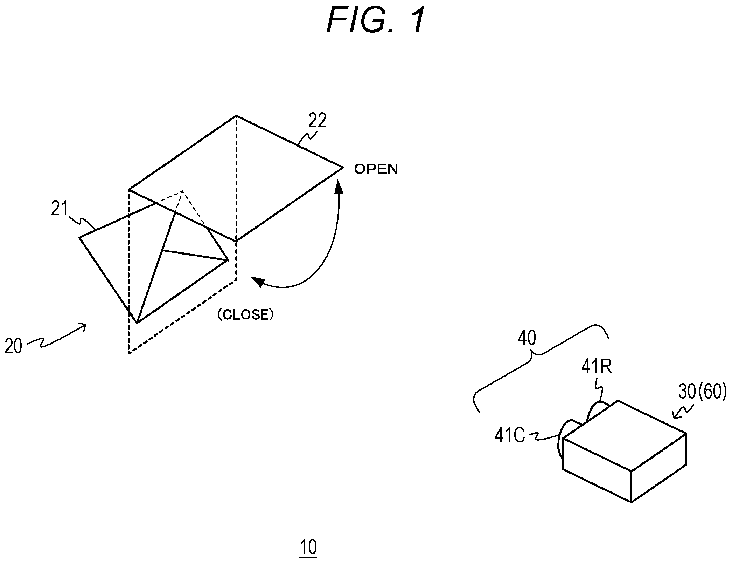

Fig. 1 exemplifies a configuration of a calibration system. A calibration system 10 includes a calibration target 20 and an information processing apparatus 30. The calibration target 20 includes a characteristic switching unit which can perform switching to a different reflection characteristic state. The information processing apparatus 30 includes a sensor unit 40 and a calibration unit 60 corresponding to a calibration apparatus of the present technology. The sensor unit 40 includes a plurality of sensors, generates a detection signal indicating detection results of the calibration target 20, and outputs the detection signal to the calibration unit 60. The calibration unit 60 uses the detection signal supplied from the sensor unit 40 to perform state detection so as to find to which state a reflection characteristic of the calibration target 20 is switched. Furthermore, the calibration unit 60 calculates, by using state detection results, a time difference between detection signals each generated by one of the sensors, and sets a time difference correction amount on the basis of a calculation result.

The plurality of sensors of the sensor unit 40 includes at least an active sensor. For example, the plurality of sensors may include an active sensor and a passive sensor, or may include a plurality of active sensors. As the active sensor, a radar and/or a lidar is used.

In a case where an imaging unit 41C using an image sensor (passive sensor) which generates a detection signal indicating an imaged image of the calibration target, and a radar unit 41R using a radar (active sensor) which radiates a transmission beam and generates a detection signal on the basis of the transmission beam (reflection beam) reflected by the calibration target are used as the plurality of sensors, in the calibration target 20, the characteristic switching unit which can perform switching to a different reflection characteristic state includes a reflector 21 and a radio wave absorber 22. The calibration target 20 performs switching to either of two states, i.e., a state where the reflector 21 is not hidden by the radio wave absorber 22 and a state where the reflector 21 is hidden by the radio wave absorber 22. On the basis of the state detected on the basis of the detection signal generated by the imaging unit 41C and the state detected on the basis of the detection signal generated by the radar unit 41R, the calibration unit 60 detects a time difference between the detection signals of the imaging unit 41C and the radar unit 41R, and sets a correction amount for correcting detected temporal misalignment.

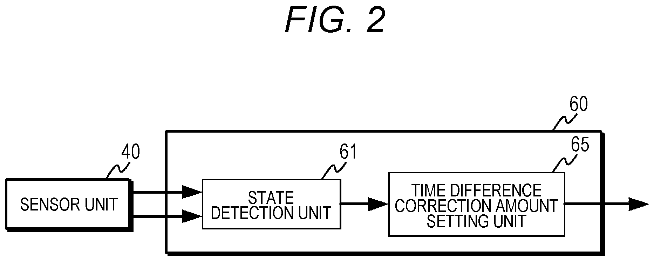

Fig. 2 exemplifies a configuration of the calibration unit. The calibration unit 60 includes a state detection unit 61 and a time difference correction amount setting unit 65.

On the basis of the detection signals each generated by one of the sensors in the sensor unit 40, the state detection unit 61 detects which state of the reflection characteristic (hereinafter, also simply referred to as "state of the calibration target") the calibration target 20 is in. For example, the state detection unit 61 performs image recognition using the detection signal generated by the imaging unit 41C, detects a state, i.e., whether the reflector 21 is not hidden or is hidden by the radio wave absorber 22, and outputs a state detection result to the time difference correction amount setting unit 65. Furthermore, on the basis of a reflection level indicated by the detection signal generated by the radar unit 41R, the state detection unit 61 detects a state, i.e., whether the reflector 21 is not hidden or is hidden by the radio wave absorber 22, and outputs a state detection result to the time difference correction amount setting unit 65.

The time difference correction amount setting unit 65 calculates a time difference ER between the detection signals each generated by one of the sensors on the basis of the state detection results supplied from the state detection unit 61, and sets a time difference correction amount EC on the basis of a calculation result.

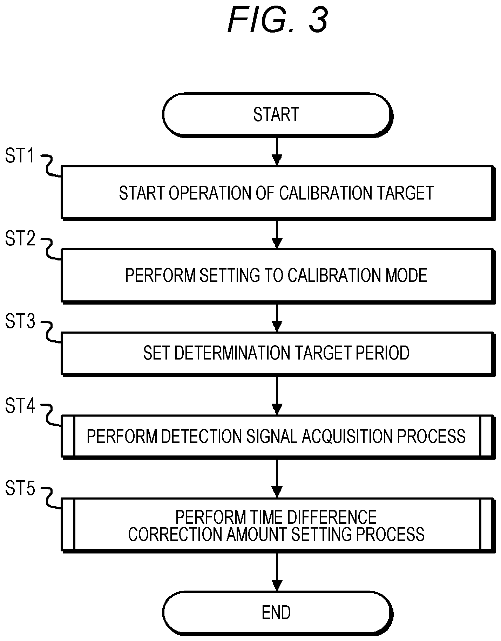

Fig. 3 is a flowchart exemplifying an operation of the calibration unit. In step ST1, the calibration system starts an operation of the calibration target. The calibration target 20 of the calibration system 10 starts a switching operation for switching the reflection characteristic to a different state, and proceeds to step ST2.

In step ST2, the calibration system performs setting to a calibration mode. The information processing apparatus 30 of the calibration system 10 sets an operation mode to the calibration mode in which a time difference correction amount is set by using the detection signals generated by the sensor unit 40, and proceeds to step ST3.

In step ST3, the calibration system sets a determination target period. The information processing apparatus 30 of the calibration system 10 sets a signal period of each of the detection signals used for setting the time difference correction amount as the determination target period, and proceeds to step ST4.

In step ST4, the calibration system performs a detection signal acquisition process. The information processing apparatus 30 of the calibration system 10 starts an operation of the sensor unit 40, acquires a detection signal indicating a detection result of the calibration target for each sensor of the sensor unit 40 for the determination target period, and proceeds to step ST5.

In step ST5, the calibration system performs a time difference correction amount setting process. On the basis of the detection signals acquired in step ST4, the calibration unit 60 in the information processing apparatus 30 of the calibration system 10 calculates a time difference between the detection signals by using the state detection results indicating which state of the reflection characteristic the calibration target 20 is in, and sets a time difference correction amount.

<2. First Embodiment>

Next, a first embodiment will be described. In the first embodiment, for example, an imaging unit (passive sensor) and a radar unit (active sensor) are used as a plurality of sensors, and a time difference is calculated by using a detection signal generated by the imaging unit as reference. Furthermore, frame numbers are used for the calculation of the time difference.

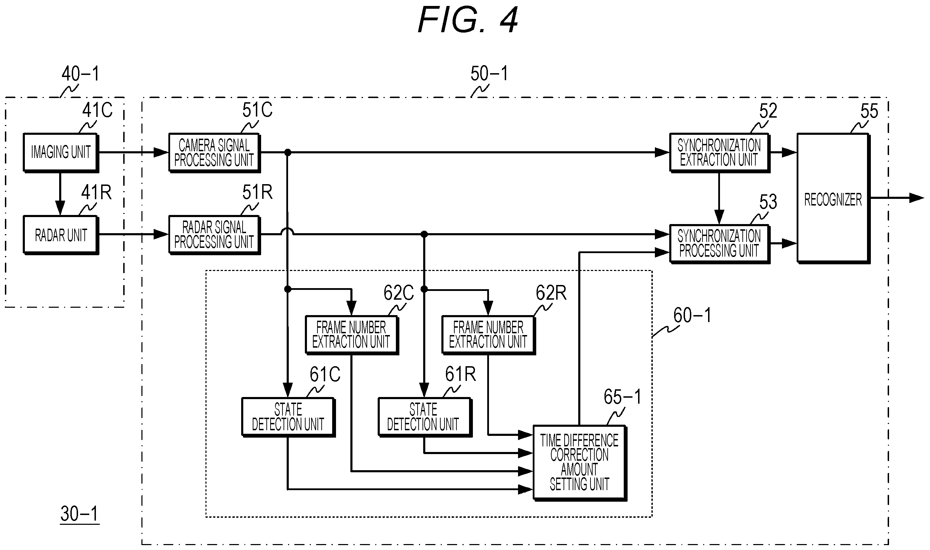

Fig. 4 exemplifies a configuration of an information processing apparatus in the first embodiment. An information processing apparatus 30-1 includes a sensor unit 40-1 and a signal processing unit 50-1.

The sensor unit 40-1 includes the imaging unit 41C and the radar unit 41R. The imaging unit 41C generates a detection signal indicating an imaged image of the calibration target for each frame and outputs the detection signal to the signal processing unit 50-1. The radar unit 41R generates a detection signal for each frame on the basis of a reflection beam and outputs the detection signal to the signal processing unit 50-1. Furthermore, the detection signals generated by the imaging unit 41C and the radar unit 41R include frame information (for example, frame numbers).

The signal processing unit 50-1 includes a camera signal processing unit 51C, a radar signal processing unit 51R, a synchronization extraction unit 52, a synchronization processing unit 53, a recognizer 55, and a calibration unit 60-1.

The camera signal processing unit 51C performs a camera signal process, for example, at least one of a noise removal process, a gain adjustment process, a defective pixel correction process, a demosaic process, a color adjustment process, or the like, with respect to the detection signal supplied from the imaging unit 41C. The camera signal processing unit 51C outputs the processed detection signal to the synchronization extraction unit 52 and the calibration unit 60-1.

On the basis of the detection signal from the radar unit 41R, the radar signal processing unit 51R calculates a relative distance and a relative speed with respect to the calibration target on the basis of a difference between the frequency of the reflection beam and the frequency of a transmission beam. Furthermore, a direction of the calibration target is calculated on the basis of a phase difference between receiving array antennas of the reflection beam. The radar signal processing unit 51R outputs the processed detection signal to the synchronization processing unit 53 and the calibration unit 60-1.

The synchronization extraction unit 52 extracts frame numbers from the detection signal and outputs the frame numbers to the synchronization processing unit 53. Furthermore, the synchronization extraction unit 52 may extract the frame numbers and a synchronization signal from the detection signal and output the frame numbers and the synchronization signal to the synchronization processing unit 53. Furthermore, the synchronization extraction unit 52 outputs the detection signal supplied from the camera signal processing unit 51C to the recognizer 55.

The synchronization processing unit 53 corrects frame numbers of the detection signal supplied from the radar signal processing unit 51R on the basis of the frame numbers supplied from the synchronization extraction unit 52 and the time difference correction amount EC set by the calibration unit 60-1, and outputs the corrected detection signal to the recognizer 55. Furthermore, in a case where the synchronization signal is supplied from the synchronization extraction unit 52, the synchronization processing unit 53 may output the detection signal of which the frame numbers have been corrected to the recognizer 55 at timing equal to that of the detection signal output from the synchronization extraction unit 52 to the recognizer 55 by synchronizing these detection signals, that is, by matching the frame numbers of these detection signals.

The recognizer 55 performs a subject recognition process and the like on the basis of the detection signal supplied from the synchronization extraction unit 52 and the detection signal supplied from the synchronization processing unit 53, which is a detection signal in which temporal misalignment has been corrected.

The calibration unit 60-1 sets the time difference correction amount EC using the detection signals generated by the imaging unit 41C and the radar unit 41R. The calibration unit 60-1 includes state detection units 61C and 61R, frame number extraction units 62C and 62R, and a time difference correction amount setting unit 65-1.

The state detection unit 61C detects a state of the calibration target on the basis of the detection signal supplied from the camera signal processing unit 51C. For example, the state detection unit 61C performs image recognition using the detection signal, detects a state, i.e., whether the reflector 21 is not hidden or is hidden by the radio wave absorber 22 in the calibration target 20, and outputs a result of the detection to the time difference correction amount setting unit 65-1.

The state detection unit 61R detects a state of the calibration target on the basis of the detection signal supplied from the radar signal processing unit 51R. For example, the state detection unit 61R detects a state, i.e., whether the reflector 21 is not hidden or is hidden by the radio wave absorber 22 in the calibration target 20, on the basis of a signal level of the detection signal, and outputs a result of the detection to the time difference correction amount setting unit 65-1.

The frame number extraction unit 62C extracts frame numbers from the detection signal supplied from the camera signal processing unit 51C, and outputs the frame numbers to the time difference correction amount setting unit 65-1.

The frame number extraction unit 62R extracts frame numbers from the detection signal supplied from the radar signal processing unit 51R, and outputs the frame numbers to the time difference correction amount setting unit 65-1.

With the use of any one of the detection signals each generated by one of the plurality of sensors, for example, a detection signal SC, as reference, the time difference correction amount setting unit 65-1 calculates the time difference ER in a detection signal SR with respect to the detection signal SC as reference by using state detection results of respective frames in the state detection units 61C and 61R. Regarding the calculation of the time difference ER, for example, the frame numbers supplied from the frame number extraction units 62C and 62R are used, and a difference in the frame numbers when there occurs an equal change in the state of the calibration target is defined as the time difference ER. Furthermore, the time difference correction amount setting unit 65-1 sets the time difference correction amount EC with respect to the detection signal SR on the basis of the calculated time difference ER.

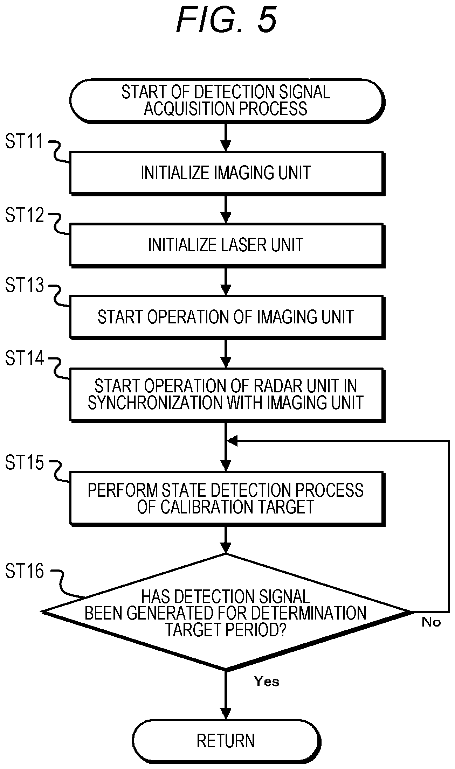

Next, an operation of the first embodiment will be described. Fig. 5 is a flowchart exemplifying the detection signal acquisition process in the first embodiment. Note that the detection signal acquisition process corresponds to the process of step ST4 in Fig. 3.

In step ST11, the information processing apparatus initializes the imaging unit. The information processing apparatus 30-1 initializes the imaging unit 41C in the sensor unit 40, and proceeds to step ST12.

In step ST12, the information processing apparatus initializes the radar unit. The information processing apparatus 30-1 initializes the radar unit 41R in the sensor unit 40, and proceeds to step ST13.

In step ST13, the information processing apparatus starts an operation of the imaging unit. The information processing apparatus 30-1 operates the imaging unit 41C to start imaging the calibration target 20, generates a detection signal, and proceeds to step ST14. Note that the detection signal generated by the imaging unit 41C is processed by the camera signal processing unit 51C. Furthermore, in step ST13, the imaging unit 41C outputs a synchronization signal used when generating the detection signal to the radar unit 41R.

In step ST14, the information processing apparatus starts an operation of the radar unit in synchronization with the imaging unit. The information processing apparatus 30-1 operates the radar unit 41R using the synchronization signal supplied from the imaging unit 41C as reference, starts generating a detection signal indicating a state of reflection of an electromagnetic wave by the calibration target 20, and proceeds to step ST15. Note that the detection signal generated by the radar unit 41R is processed by the radar signal processing unit 51R as described above.

In step ST15, the information processing unit performs a state detection process of the calibration target. The state detection unit 61C in the calibration unit 60 of the information processing apparatus 30-1 detects a state of the calibration target 20 on the basis of the detection signal generated by the imaging unit 41C and processed by the camera signal processing unit 51C. Furthermore, a state detection unit 61L detects a state of the calibration target 20 on the basis of the detection signal generated by the radar unit 41R and processed by the radar signal processing unit 51R, and proceeds to step ST16.

In step ST16, the information processing apparatus determines whether or not the detection signal has been generated for the determination target period. The information processing apparatus 30-1 returns to step ST15 if the detection signal has been generated by the imaging unit 41C for a period shorter than the determination target period, for example, if the detection signal has been generated in which the number of frames is smaller than a predetermined number of frames (for example, n frames), and ends the detection signal acquisition process if it is determined that the detection signal has been generated for the determination target period in the imaging unit 41C, for example, if the detection signal including a predetermined number of frames (for example, n frames) has been generated.

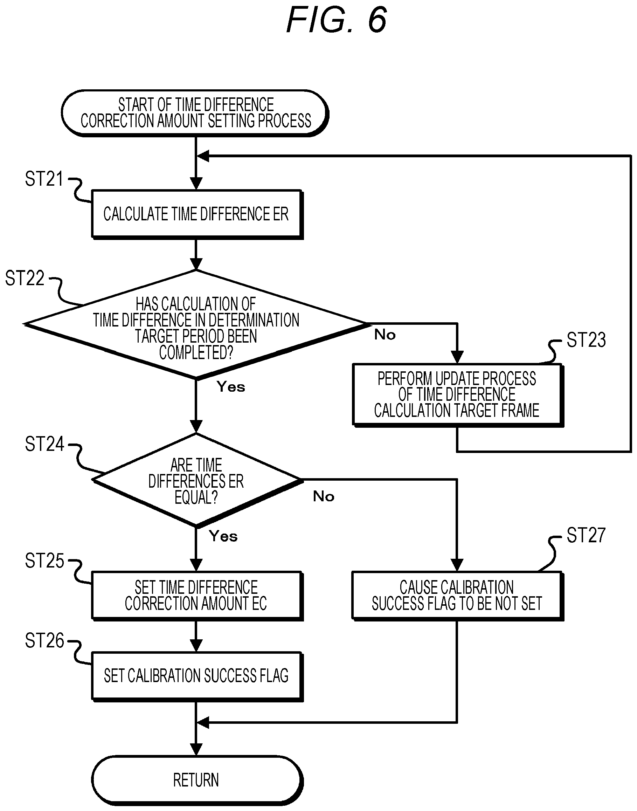

Fig. 6 is a flowchart exemplifying the time difference correction amount setting process in the first embodiment. Note that the time difference correction amount setting process corresponds to step ST5 in Fig. 3.

In step ST21, the information processing apparatus calculates the time difference ER. Regarding a time difference calculation target frame of the detection signal generated by the imaging unit 41C, the time difference correction amount setting unit 65-1 in the calibration unit 60 of the information processing apparatus 30-1 calculates a time difference with respect to the detection signal generated by the radar unit 41R on the basis of the state detection result. Note that the time difference calculation target frame is a first frame after the state detection result of the calibration target 20 changes in the determination target period and/or a frame immediately therebefore, and in the following description, a case is exemplified where a first frame after the state detection result changes is defined as the time difference calculation target frame.

For example, the frame numbers of the detection signal SC for the determination target period generated by the imaging unit 41C are denoted by "i to i + n". Furthermore, in the determination target period, the frame numbers of the detection signal SR generated by the radar unit 41R before the time difference correction are denoted by "j to j + n".

The time difference correction amount setting unit 65-1 calculates the time difference ER by using a frame number of the detection signal SR indicating a change in the state detection result of the calibration target 20 equal to that in the detection signal SC. Furthermore, in a case where the states of the calibration target 20 can be switched in a predetermined period, a frame which indicates an equal change in the state detection result is defined as a frame having a smallest frame difference within a period of time shorter than one state switching period of the calibration target 20.

Here, in a case where the state detection result changes at a frame having frame number ig of the detection signal SC and a change equal to that change occurs at a frame having frame number jk of the detection signal SR, a time difference ERg is calculated on the basis of the formula (1), and the process proceeds to step ST22.

$$ERg = (ig - jk) \quad ... \quad (1)$$

In step ST22, the information processing apparatus determines whether or not the calculation of the time difference in the determination target period has been completed. The time difference correction amount setting unit 65-1 of the information processing apparatus 30-1 proceeds to step ST23 if the calculation of the time difference, which is performed for each frame in which the state detection result has changed in the determination target period, has not been completed, and proceeds to step ST24 if the calculation of the time difference, which is performed for each frame in which the state detection result has changed, has been completed.

In step ST23, the information processing apparatus performs an update process of the time difference calculation target frame. The time difference correction amount setting unit 65-1 of the information processing apparatus 30-1 sets the time difference calculation target frame to a next frame in the detection signal SC in which the state detection result of the calibration target 20 has changed, and returns to step ST21.

In step ST24, the information processing apparatus determines whether or not the calculated time differences ER are equal. The time difference correction amount setting unit 65-1 of the information processing apparatus 30-1 proceeds to step ST25 if it is determined that the time differences ER are equal, and proceeds to step ST27 if a frame indicating a different time difference ER is included.

In step ST25, the information processing apparatus sets a time difference correction amount. On the basis of the time difference ER calculated in step ST22, the time difference correction amount setting unit 65-1 of the information processing apparatus 30-1 sets the time difference correction amount EC with which a frame number of the detection signal SR indicating a change in the state detection result equal to that in the detection signal SC is made equal to a corresponding frame number of the detection signal SC, and proceeds to step ST26.

In step ST26, the information processing apparatus sets a calibration success flag. Because the setting of the time difference correction amount EC has been completed, the time difference correction amount setting unit 65-1 of the information processing apparatus 30-1 sets the calibration success flag to a set state (on state), and ends the time difference correction amount setting process.

In step ST27, the information processing apparatus causes the calibration success flag to be not set. The time difference correction amount setting unit 65-1 of the information processing apparatus 30-1 does not perform the setting of the time difference correction amount EC because a frame indicating a different time difference is included, and thus the time difference correction amount setting unit 65-1 of the information processing apparatus 30-1 sets the calibration success flag to a non-set state (off state), and ends the time difference correction amount setting process.

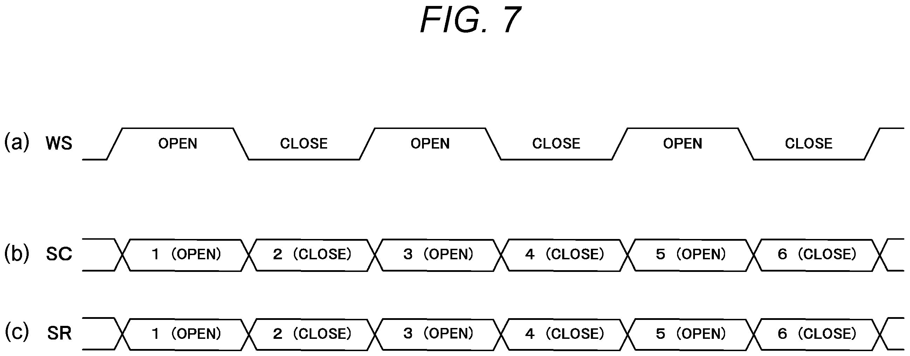

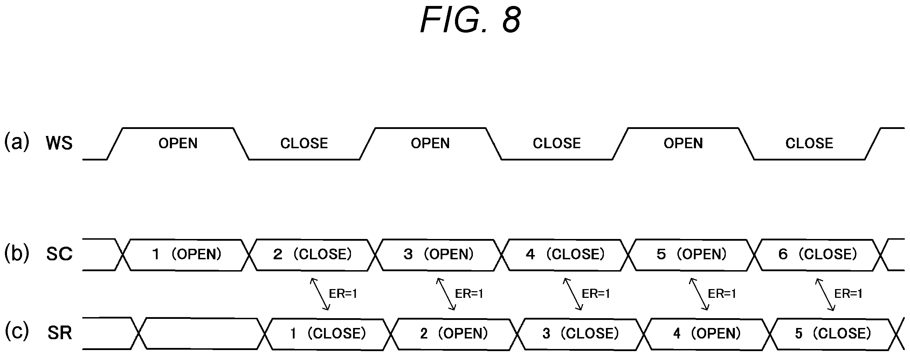

Next, operation examples of the first embodiment will be described with reference to Figs. 7 to 13. Fig. 7 is a diagram illustrating a first operation example in the first embodiment, and Fig. 8 is a diagram illustrating a second operation example in the first embodiment. In each of the first operation example and the second operation example, a case is exemplified where periods of two states, i.e., a state where the reflector 21 in the calibration target 20 is not hidden by the radio wave absorber 22 and a state where the reflector 21 is hidden by the radio wave absorber 22, each correspond to a one-frame period of the detection signals SC and SR.

The first operation example illustrated in Fig. 7 illustrates a case where the detection signal SC generated by the imaging unit 41C and the detection signal SR generated by the radar unit 41R are synchronized. (a) of Fig. 7 illustrates a state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, a state switching period of the calibration target 20 is a two-frame period (for example, about one second).

(b) of Fig. 7 illustrates frame numbers and state detection results of the detection signal SC generated by the imaging unit 41C. Furthermore, (c) of Fig. 7 illustrates frame numbers and state detection results of the detection signal SR generated by the radar unit 41R.

In a case where the detection signal SC generated by the imaging unit 41C and the detection signal SR generated by the radar unit 41R are synchronized, the frame numbers of the detection signal SC and the detection signal SR when there occurs an equal change in the state of the calibration target 20 are equal. Therefore, the time difference correction amount EC is "0".

The second operation example illustrated in Fig. 8 illustrates a case where there is temporal misalignment between the detection signal SC generated by the imaging unit 41C and the detection signal SR generated by the radar unit 41R.

(a) of Fig. 8 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 8 illustrates frame numbers and state detection results of the detection signal SC generated by the imaging unit 41C. Furthermore, (c) of Fig. 8 illustrates frame numbers and state detection results of the detection signal SR generated by the radar unit 41R.

In a case where there is temporal misalignment in the detection signal SR generated by the radar unit 41R with respect to the detection signal SC generated by the imaging unit 41C, frame numbers which indicate an equal change in the state detection results of the calibration target 20 may differ between the detection signal SC and the detection signal SR. For example, frame number 2 is a frame in which the state detection result based on the detection signal SC has changed from an OPEN state to a CLOSE state, whereas a frame in which the state detection result based on the detection signal SR has changed from the OPEN state to the CLOSE state is frame number 1, and therefore, the time difference ER is "1". Furthermore, frame number 3 is a frame in which the state detection result based on the detection signal SC has changed from the CLOSE state to the OPEN state, whereas a frame in which the state detection result based on the detection signal SR has changed from the CLOSE state to the OPEN state is frame number 2, and therefore, the time difference ER is "1". Furthermore, between other frame numbers when there occurs an equal change in the state of the calibration target, as well, the time difference ER is "1". Therefore, the time difference correction amount setting unit 65-1 sets the time difference correction amount EC to "1". Furthermore, when the time difference correction amount EC is set, the calibration success flag is set to the set state by the time difference correction amount setting process illustrated in Fig. 6.

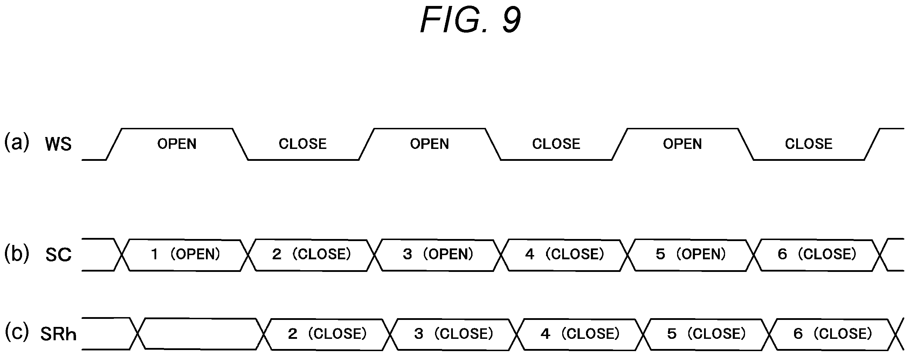

Fig. 9 illustrates the second operation example after calibration, and the time difference correction process has been performed on the detection signal SR generated by the radar unit 41R using the detection signal SC generated by the imaging unit 41C as reference. (a) of Fig. 9 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 9 illustrates frame numbers and state detection results of the detection signal SC generated by the imaging unit 41C. Furthermore, (c) of Fig. 9 illustrates frame numbers and state detection results of a detection signal SRh on which the time difference correction process has been performed. As described with reference to Fig. 8, in a case where there is the time difference illustrated in Fig. 8 between the detection signal SC and the detection signal SR, the time difference correction amount EC is set to "1". Therefore, the synchronization processing unit 53 adds "1" to the frame numbers of the detection signal SR to generate the detection signal SRh illustrated in (c) of Fig. 9. By performing such a process, the time difference between the detection signal SC and the detection signal SR can be corrected.

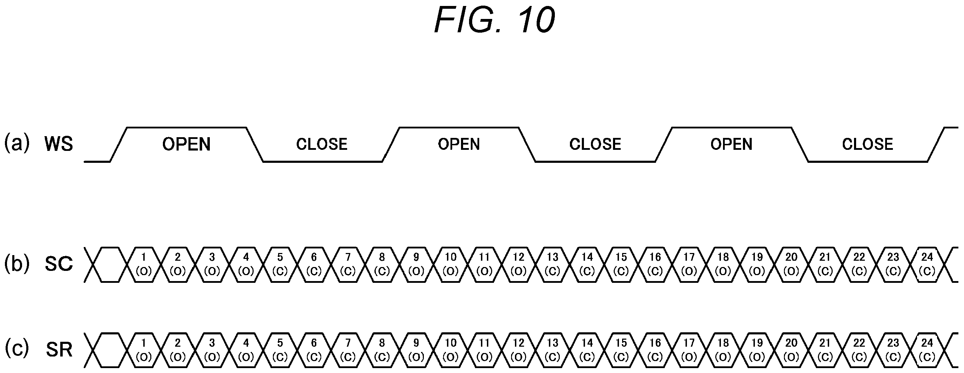

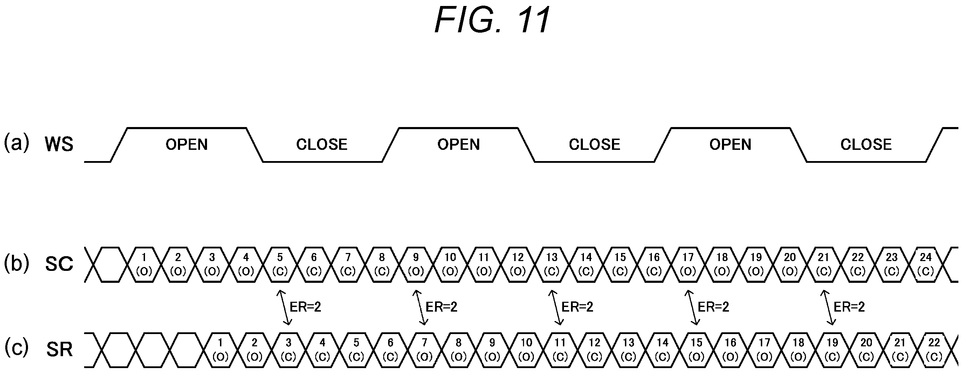

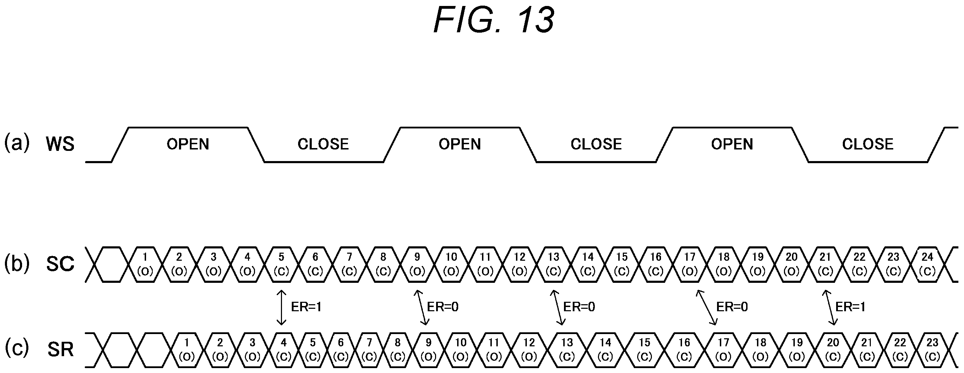

Fig. 10 is a diagram illustrating a third operation example in the first embodiment, Fig. 11 is a diagram illustrating a fourth operation example in the first embodiment, and Fig. 13 is a diagram illustrating a fifth operation example in the first embodiment. In each of the third operation example, the fourth operation example, and the fifth operation example, a case is exemplified where the periods of the two states of the calibration target 20 are each a multiple-frame period of the detection signals SC and SR.

The third operation example illustrated in Fig. 10 illustrates a case where the detection signal SC generated by the imaging unit 41C and the detection signal SR generated by the radar unit 41R are synchronized. (a) of Fig. 10 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 10 illustrates frame numbers and state detection results of the detection signal SC generated by the imaging unit 41C. Note that in the following figures, a reference sign (O) indicates that the state detection result is the OPEN state, and a reference sign (C) indicates that the state detection result is the CLOSE state. (c) of Fig. 10 illustrates frame numbers and state detection results of the detection signal SR generated by the radar unit 41R.

In a case where the detection signal SC generated by the imaging unit 41C and the detection signal SR generated by the radar unit 41R are synchronized, the frame numbers of the detection signal SC and the detection signal SR when there occurs an equal change in the state of the calibration target 20 are equal. Therefore, the time difference correction amount EC is "0".

The fourth operation example illustrated in Fig. 11 illustrates a case where there is temporal misalignment between the detection signal generated by the imaging unit 41C and the detection signal generated by the radar unit 41R.

(a) of Fig. 11 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 11 illustrates frame numbers and state detection results of the detection signal SC generated by the imaging unit 41C. Furthermore, (c) of Fig. 11 illustrates frame numbers and state detection results of the detection signal SR generated by the radar unit 41R.

In a case where there is temporal misalignment in the detection signal SR generated by the radar unit 41R with respect to the detection signal SC generated by the imaging unit 41C, frame numbers which indicate an equal change in the state detection results of the calibration target 20 may differ between the detection signal SC and the detection signal SR. For example, frame number 5 is a frame in which the state detection result based on the detection signal SC has changed from the OPEN state to the CLOSE state, whereas a frame in which the state detection result based on the detection signal SR has changed from the OPEN state to the CLOSE state is frame number 3, and therefore, the time difference ER is "2". Furthermore, frame number 9 is a frame in which the state detection result based on the detection signal SC has changed from the CLOSE state to the OPEN state, whereas a frame in which the state detection result based on the detection signal SR has changed from the CLOSE state to the OPEN state is frame number 7, and therefore, the time difference ER is "2". Furthermore, between other frame numbers when there occurs an equal change in the state of the calibration target, as well, the time difference ER is "2". Therefore, the time difference correction amount setting unit 65-1 sets the time difference correction amount EC to "2". Furthermore, when the time difference correction amount EC is set, the calibration success flag is set to the set state.

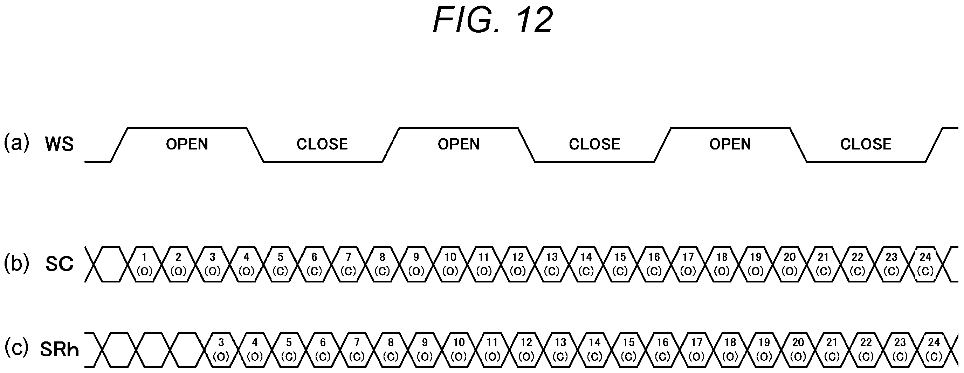

Fig. 12 illustrates the fourth operation example after calibration, and the time difference correction process has been performed on the detection signal SR generated by the radar unit 41R using the detection signal SC generated by the imaging unit 41C as reference. (a) of Fig. 12 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 12 illustrates frame numbers and state detection results of the detection signal SC generated by the imaging unit 41C. Furthermore, (c) of Fig. 12 illustrates frame numbers and state detection results of the detection signal SRh on which the time difference correction process has been performed. As described with reference to Fig. 11, in a case where there is the time difference illustrated in Fig. 11 between the detection signal SC and the detection signal SR, the time difference correction amount EC is set to "2". Therefore, the synchronization processing unit 53 adds "2" to the frame numbers of the detection signal SR to generate the detection signal SRh illustrated in (c) of Fig. 12. By performing such a process, the time difference between the detection signal SC and the detection signal SR can be corrected.

As described above, according to the first embodiment, it is possible to correct temporal misalignment between the detection signals acquired by the plurality of sensors.

The fifth operation example illustrated in Fig. 13 exemplifies a case where there is temporal misalignment between the detection signal generated by the imaging unit 41C and the detection signal generated by the radar unit 41R, and the period of the detection signal SR varies.

(a) of Fig. 13 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 13 illustrates frame numbers and state detection results of the detection signal SC generated by the imaging unit 41C. Furthermore, (c) of Fig. 13 illustrates frame numbers and state detection results of the detection signal SR generated by the radar unit 41R.

In a case where there is temporal misalignment between the detection signal SC generated by the imaging unit 41C and the detection signal SR generated by the radar unit 41R and the period of the detection signal SR varies, as described above, a difference in the frame numbers of the detection signal SR which indicate an equal change in the state detection results of the calibration target 20 based on the detection signal SC may vary. Note that in Fig. 13, the time difference ER, which is a difference between the frame numbers, is "1" or "0". In such a case, the calibration success flag is set to the non-set state by the time difference correction amount setting process illustrated in Fig. 6.

As described above, according to the first embodiment, temporal misalignment between the detection signals acquired by the plurality of sensors can be corrected by setting the time difference correction amount on the basis of the state detection results of the calibration target. Furthermore, if a recognition process using the corrected detection signal is performed when the calibration success flag is in the set state, the recognition process can be performed accurately. Furthermore, since the calibration success flag is in the non-set state in a case where the temporal misalignment cannot be corrected, it is possible to prevent problems resulting from the use of the detection signal including the temporal misalignment, for example, a decrease in object recognition accuracy, from occurring, if the recognizer 55 performs a recognition process using the detection signal SC or the detection signal SR in a case where the calibration success flag is in the non-set state.

### <3. Second Embodiment>

Next, a second embodiment will be described. As described above, in a case where the two states of the calibration target 20 are switched therebetween in a predetermined period, if the temporal misalignment is equal to or longer than the periods of the two states of the calibration target 20, the temporal misalignment cannot be corrected properly. For example, in a case where there is a time difference longer than a predetermined period, if a frame number of the detection signal SR which indicates an equal change in the state detection results is detected within the predetermined period, the time difference cannot be detected correctly. Therefore, in the second embodiment, a case will be described where the number of states of the calibration target 20 is increased to more than two to make it possible to correct temporal misalignment larger than that in the first embodiment.

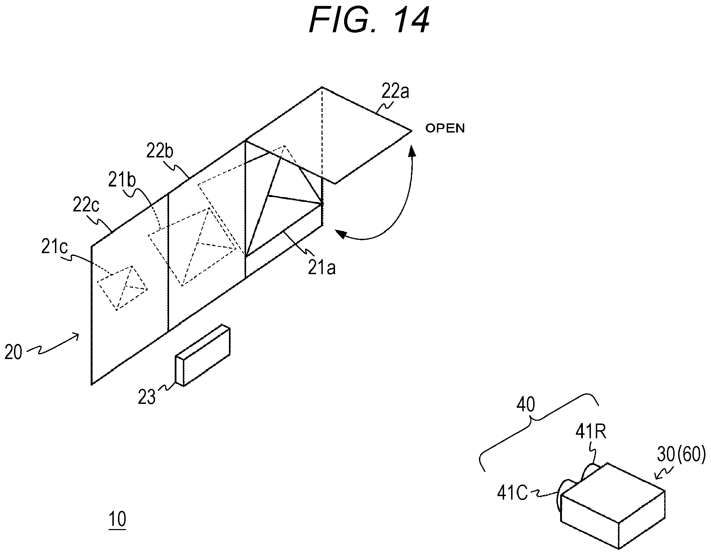

Fig. 14 exemplifies a configuration of the second embodiment. In a case where the imaging unit 41C which generates a detection signal indicating an imaged image of the calibration target, and the radar unit 41R which radiates a transmission beam and generates a detection signal on the basis of the transmission beam (reflection beam) reflected by the calibration target are used as the plurality of sensors similarly to the first embodiment, the calibration target 20 includes a plurality of reflectors having different radar cross-sections (RCS), radio wave absorbers provided for respective reflectors, and an indicator 23 which indicates that which reflector reflects the transmission beam. Note that in Fig. 14, reflectors 21a, 21b, and 21c having different radar cross-sections and radio wave absorbers 22a, 22b, and 22c for respective reflectors are provided.

In the calibration target 20, the reflectors 21a, 21b, and 21c are selected in a predetermined order, the selected reflector is set in a state of not being hidden by the radio wave absorber, and the remaining reflectors are set in a state of being hidden by the radio wave absorbers. For example, in a case where the reflector 21a is selected, the reflector 21a is set in a state of not being hidden by the radio wave absorber 22a, and the other reflectors 21b and 21c are set in a state of being hidden by the radio wave absorbers 22b and 22c, respectively. Furthermore, the indicator 23 indicates information indicating the selected reflector, specifically, an index indicating the selected reflector, a radar cross-section of the selected reflector, and the like. For example, in a case where the reflector 21a is selected, an index indicating the reflector 21a thus selected is indicated. As described above, if the reflectors 21a, 21b, and 21c are selected in a predetermined order, the three states are switched in a predetermined order in the calibration target 20.

On the basis of detection results of the state of the calibration target 20 detected on the basis of the detection signal generated by the imaging unit 41C and the state of the calibration target 20 detected on the basis of the detection signal generated by the radar unit 41R, the calibration unit 60 calculates a time difference and sets the time difference correction amount EC.

The information processing apparatus in the second embodiment is configured similarly to that in the first embodiment illustrated in Fig. 4.

In the second embodiment, the state detection unit 61C detects a state of the calibration target 20 on the basis of the detection signal supplied from the camera signal processing unit 51C. For example, the state detection unit 61C recognizes the content of indication of the indicator 23 using the detection signal, and detects whether or not the calibration target 20 is in the following state: in the calibration target 20, any one of the reflectors 21a, 21b, or 21c is not hidden by the corresponding radio wave absorber, and the other reflectors are hidden by the corresponding radio wave absorbers. Then, the state detection unit 61C outputs a result of the detection to the time difference correction amount setting unit 65-1.

The state detection unit 61R detects a state of the calibration target 20 on the basis of the detection signal supplied from the radar signal processing unit 51R. For example, on the basis of a signal level of the detection signal, the state detection unit 61R detects whether or not the calibration target 20 is in the following state: in the calibration target 20, any one of the reflectors 21a, 21b, or 21c is not hidden by the corresponding radio wave absorber, and the other reflectors are hidden by the corresponding radio wave absorbers. Then, the state detection unit 61R outputs a result of the detection to the time difference correction amount setting unit 65-1.

The time difference correction amount setting unit 65-1 sets the time difference correction amount EC on the basis of the detection results from the state detection units 61C and 61R and the frame numbers supplied from the frame number extraction units 62C and 62L.

Next, an operation of the second embodiment will be described. In the second embodiment, similarly to the first embodiment, the detection signal acquisition process illustrated in Fig. 5 is performed to acquire a detection signal for the determination target period. Note that the determination target period is a period of time longer than the state switching period of the calibration target 20. Furthermore, in the second embodiment, similarly to the first embodiment, the time difference correction amount setting process illustrated in Fig. 6 is performed, the time difference ER is calculated by using a frame number of the detection signal SR indicating a change in the state detection result of the calibration target 20 equal to that in the detection signal SC, and on the basis of the calculated time difference ER, setting of the time difference correction amount EC is performed, and setting of the calibration success flag, and the like are performed.

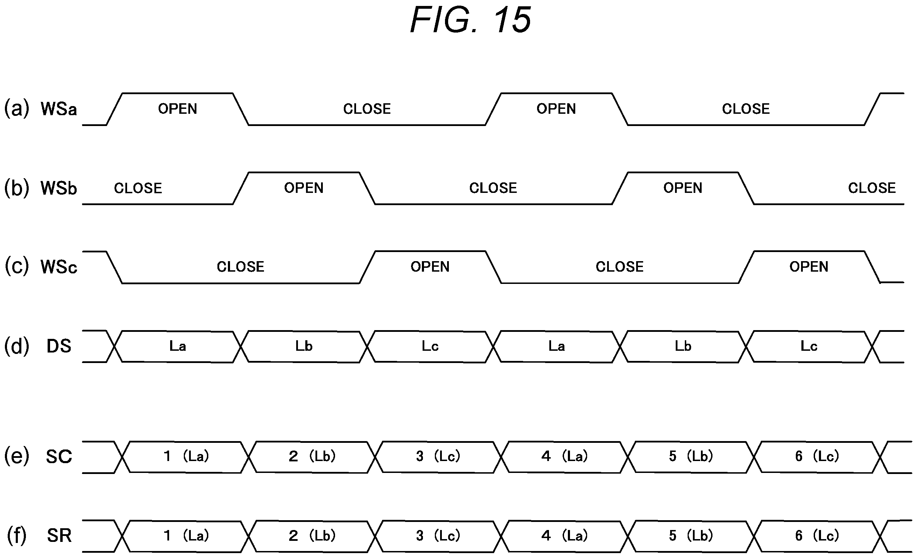

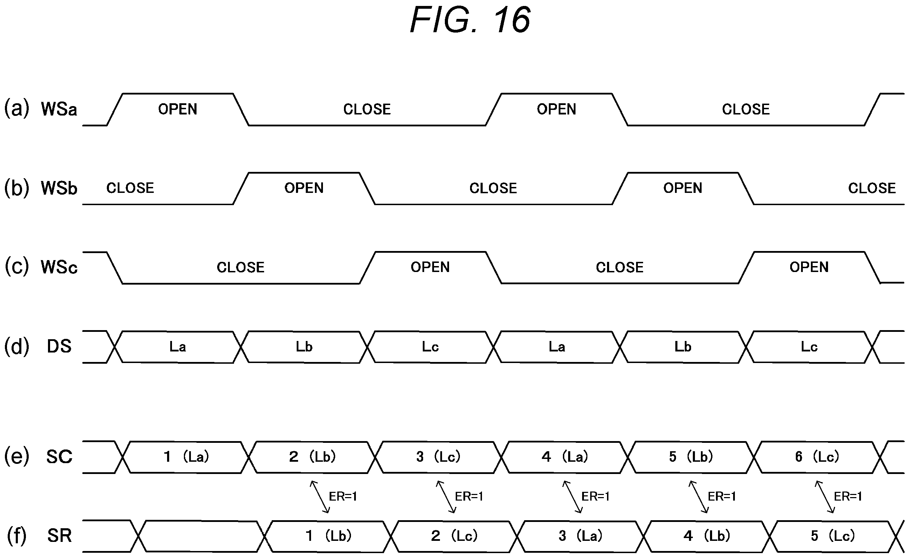

Figs. 15 to 20 are diagrams for explaining operation examples of the second embodiment. Fig. 15 is a diagram illustrating a first operation example in the second embodiment, and Fig. 16 is a diagram illustrating a second operation example in the second embodiment. In each of the first operation example and the second operation example, a case is exemplified where the periods of the three states of the calibration target 20 are each a one-frame period of the detection signals SC and SR.

The first operation example illustrated in Fig. 15 illustrates a case where the detection signal generated by the imaging unit 41C and the detection signal generated by the radar unit 41R are synchronized. (a) of Fig. 15 illustrates a state WSa where the reflector 21a is selected in the calibration target 20, and a state where the reflector 21a is not hidden by the radio wave absorber 22a is denoted by "OPEN", and a state where the reflector 21a is hidden by the radio wave absorber 22a is denoted by "CLOSE". (b) of Fig. 15 illustrates a state WSb where the reflector 21b is selected in the calibration target 20, and a state where the reflector 21b is not hidden by the radio wave absorber 22b is denoted by "OPEN", and a state where the reflector 21b is hidden by the radio wave absorber 22b is denoted by "CLOSE". (c) of Fig. 15 illustrates a state WSc where the reflector 21c is selected in the calibration target 20, and a state where the reflector 21c is not hidden by the radio wave absorber 22c is denoted by "OPEN", and a state where the reflector 21c is hidden by the radio wave absorber 22c is denoted by "CLOSE". In that case, the state switching period of the calibration target 20 is a three-frame period.

(d) of Fig. 15 illustrates indication information DS of the indicator 23. For example, indication La indicates that only the reflector 21a is not hidden by the radio wave absorber 22a, and the reflectors 21b and 21c are hidden by the radio wave absorbers 22b and 22c, respectively. Indication Lb indicates that only the reflector 21b is not hidden by the radio wave absorber 22b, and the reflectors 21a and 21c are hidden by the radio wave absorbers 22a and 22c, respectively. Indication Lc indicates that only the reflector 21c is not hidden by the radio wave absorber 22c, and the reflectors 21a and 21b are hidden by the radio wave absorbers 22a and 22b, respectively.

(e) of Fig. 15 illustrates the detection signal SC generated by the imaging unit 41C together with state detection results. Furthermore, (f) of Fig. 15 illustrates the detection signal SR generated by the radar unit 41R together with state detection results. Note that in Fig. 15 and Figs. 16 to 20 as described later, a reference sign (La) indicates that an indication recognition result of the indicator 23 is indication La, a reference sign (Lb) indicates that an indication recognition result is indication Lb, and a reference sign (Lc) indicates that an indication recognition result of the indicator 23 is indication Lc.

In a case where the detection signal SC generated by the imaging unit 41C and the detection signal SR generated by the radar unit 41R are synchronized, the frame numbers of the detection signal SC and the detection signal SR when there occurs an equal change in the state of the calibration target 20 are equal. Therefore, the time difference correction amount EC is "0".

The second operation example illustrated in Fig. 16 illustrates a case where there is temporal misalignment between the detection signal generated by the imaging unit 41C and the detection signal generated by the radar unit 41R. Note that (a) of Fig. 16 is similar to (a) of Fig. 15, and (b) to (d) of Fig. 16 are similar to (b) to (d) of Fig. 15, and thus descriptions thereof will be omitted.

(e) of Fig. 16 illustrates the detection signal SC generated by the imaging unit 41C together with state detection results. Furthermore, (f) of Fig. 16 illustrates the detection signal SR generated by the radar unit 41R together with state detection results.

In a case where there is temporal misalignment in the detection signal SR generated by the radar unit 41R with respect to the detection signal SC generated by the imaging unit 41C, frame numbers which indicate an equal change in the state detection results of the calibration target 20 may differ between the detection signal SC and the detection signal SR. For example, frame number 2 is a frame in which the state detection result based on the detection signal SC has changed from the indication La to the indication Lb, whereas a frame in which the state detection result based on the detection signal SR has changed from the indication La to the indication Lb is frame number 1, and therefore, the time difference ER is "1". Furthermore, frame number 3 is a frame in which the state detection result based on the detection signal SC has changed from the indication Lb to the indication Lc, whereas a frame in which the state detection result based on the detection signal SR has changed from the indication Lb to the indication Lc is frame number 2, and therefore, the time difference ER is "1". Moreover, frame number 4 is a frame in which the state detection result based on the detection signal SC has changed from the indication Lc to the indication La, whereas a frame in which the state detection result based on the detection signal SR has changed from the indication Lc to the indication La is frame number 3, and therefore, the time difference ER is "1". Therefore, the time difference correction amount setting unit 65-1 sets the time difference correction amount EC to "1". Furthermore, when the time difference correction amount EC is set, the calibration success flag is set to the set state by the time difference correction amount setting process illustrated in Fig. 6.

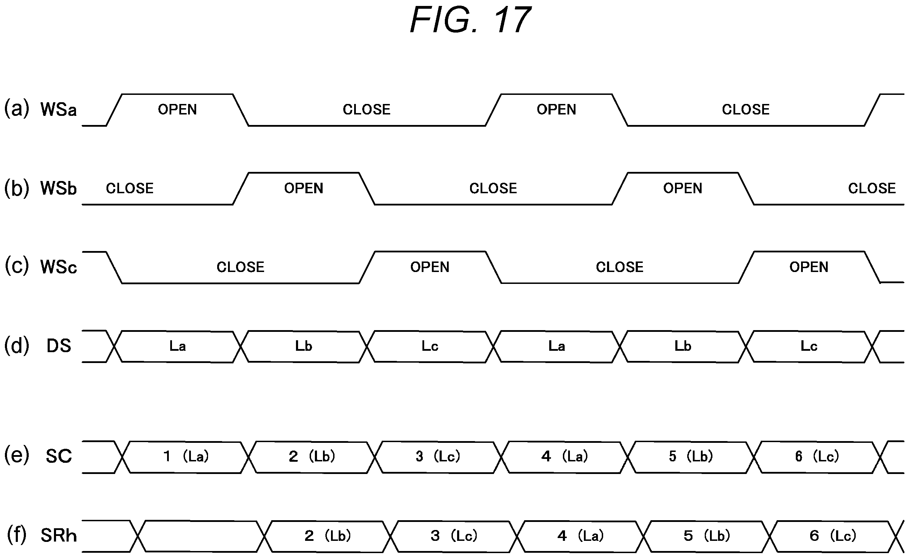

Fig. 17 illustrates the second operation example after calibration, and the time difference correction process has been performed on the detection signal SR generated by the radar unit 41R using the detection signal SC generated by the imaging unit 41C as reference. Note that (a) of Fig. 17 is similar to (a) of Fig. 15, and (b) to (d) of Fig. 17 are similar to (b) to (d) of Fig. 15, and thus descriptions thereof will be omitted.

(e) of Fig. 17 illustrates the detection signal SC generated by the imaging unit 41C together with state detection results. Furthermore, (f) of Fig. 17 illustrates the detection signal SRh on which the time difference correction process has been performed together with state detection results. As described with reference to Fig. 16, in a case where there is the time difference illustrated in Fig. 16 between the detection signal SC and the detection signal SR, "1" is added to the frame numbers of the detection signal SR since the time difference correction amount EC is set to "1", thereby generating the detection signal SRh illustrated in (f) of Fig. 17. By performing such a process, the time difference between the detection signal SC and the detection signal SR can be corrected.

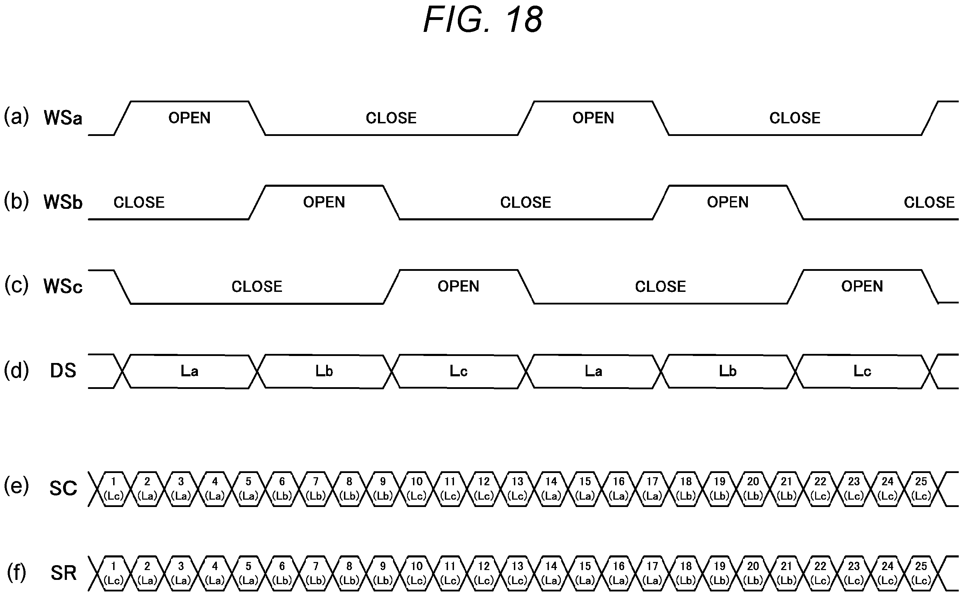

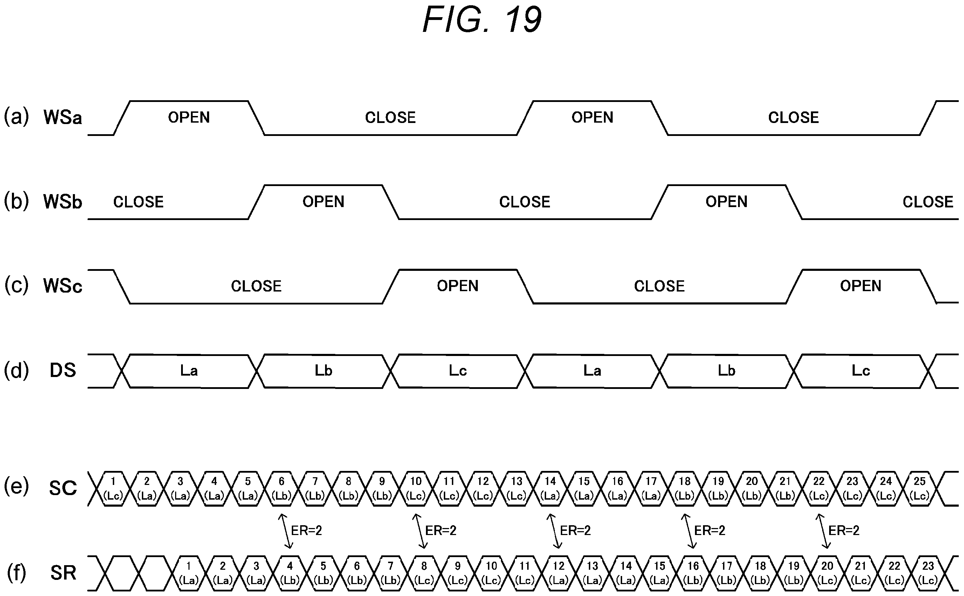

Fig. 18 is a diagram illustrating a third operation example in the second embodiment, and Fig. 19 is a diagram illustrating a fourth operation example in the second embodiment. In each of the third operation example and the fourth operation example, a case is exemplified where the periods of the two states of the calibration target 20 are each a multiple-frame period of the detection signals SC and SR.

The third operation example illustrated in Fig. 18 illustrates a case where the detection signal generated by the imaging unit 41C and the detection signal generated by the radar unit 41R are synchronized. (a) of Fig. 18 illustrates the state WSa where the reflector 21a is selected in the calibration target 20, and the state where the reflector 21a is not hidden by the radio wave absorber 22a is denoted by "OPEN", and the state where the reflector 21a is hidden by the radio wave absorber 22a is denoted by "CLOSE". (b) of Fig. 18 illustrates the state WSb where the reflector 21b is selected in the calibration target 20, and the state where the reflector 21b is not hidden by the radio wave absorber 22b is denoted by "OPEN", and the state where the reflector 21b is hidden by the radio wave absorber 22b is denoted by "CLOSE". (c) of Fig. 18 illustrates the state WSc where the reflector 21c is selected in the calibration target 20, and the state where the reflector 21c is not hidden by the radio wave absorber 22c is denoted by "OPEN", and the state where the reflector 21c is hidden by the radio wave absorber 22c is denoted by "CLOSE". In that case, the state switching period of the calibration target 20 is a three-frame period.

(d) of Fig. 18 illustrates the indication information DS of the indicator 23. For example, the indication La indicates that only the reflector 21a is not hidden by the radio wave absorber 22a, and the reflectors 21b and 21c are hidden by the radio wave absorbers 22b and 22c, respectively. The indication Lb indicates that only the reflector 21b is not hidden by the radio wave absorber 22b, and the reflectors 21a and 21c are hidden by the radio wave absorbers 22a and 22c, respectively. The indication Lc indicates that only the reflector 21c is not hidden by the radio wave absorber 22c, and the reflectors 21a and 21b are hidden by the radio wave absorbers 22a and 22b, respectively.

(e) of Fig. 18 illustrates the detection signal SC generated by the imaging unit 41C together with state detection results. Furthermore, (f) of Fig. 18 illustrates the detection signal SR generated by the radar unit 41R together with state detection results.

In a case where the detection signal SC generated by the imaging unit 41C and the detection signal SR generated by the radar unit 41R are synchronized, the frame numbers of the detection signal SC and the detection signal SR when there occurs an equal change in the state of the calibration target 20 are equal. Therefore, the time difference correction amount EC is "0".

The fourth operation example illustrated in Fig. 19 illustrates a case where there is temporal misalignment between the detection signal generated by the imaging unit 41C and the detection signal generated by the radar unit 41R. Note that (a) of Fig. 19 is similar to (a) of Fig. 18, and (b) to (d) of Fig. 19 are similar to (b) to (d) of Fig. 18, and thus descriptions thereof will be omitted.

(e) of Fig. 19 illustrates the detection signal SC generated by the imaging unit 41C together with state detection results. Furthermore, (f) of Fig. 19 illustrates the detection signal SR generated by the radar unit 41R together with state detection results.

In a case where there is a time difference in the detection signal SR generated by the radar unit 41R with respect to the detection signal SC generated by the imaging unit 41C, frame numbers which indicate an equal change in the state detection results of the calibration target 20 may differ between the detection signal SC and the detection signal SR. For example, frame number 6 is a frame in which the state detection result based on the detection signal SC has changed from the indication La to the indication Lb, whereas a frame in which the state detection result based on the detection signal SR has changed from the indication La to the indication Lb is frame number 4, and therefore, the time difference ER is "2". Furthermore, frame number 10 is a frame in which the state detection result based on the detection signal SC has changed from the indication Lb to the indication Lc, whereas a frame in which the state detection result based on the detection signal SR has changed from the indication Lb to the indication Lc is frame number 8, and therefore, the time difference ER is "2". Moreover, frame number 14 is a frame in which the state detection result based on the detection signal SC has changed from the indication Lc to the indication La, whereas a frame in which the state detection result based on the detection signal SR has changed from the indication Lc to the indication La is frame number 12, and therefore, the time difference ER is "2". Therefore, the time difference correction amount setting unit 65-1 sets the time difference correction amount EC to "2". Furthermore, when the time difference correction amount EC is set, the calibration success flag is set to the set state by the time difference correction amount setting process illustrated in Fig. 6.

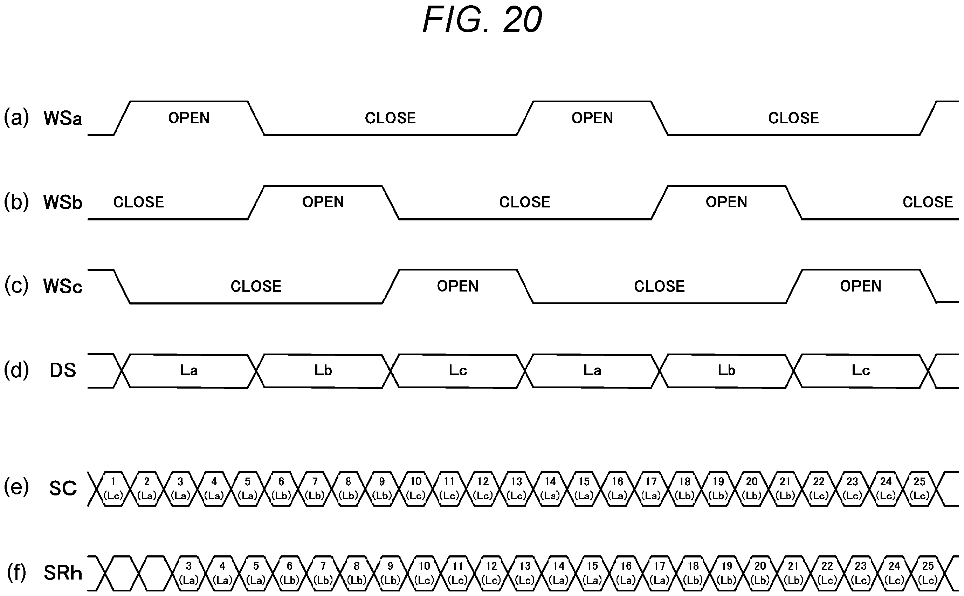

Fig. 20 illustrates the fourth operation example after calibration, and the time difference correction process has been performed on the detection signal SR generated by the radar unit 41R using the detection signal SC generated by the imaging unit 41C as reference. Note that (a) of Fig. 20 is similar to (a) of Fig. 18, and (b) to (d) of Fig. 20 are similar to (b) to (d) of Fig. 18, and thus descriptions thereof will be omitted.

(e) of Fig. 20 illustrates the detection signal SC generated by the imaging unit 41C together with state detection results. Furthermore, (f) of Fig. 20 illustrates the detection signal SRh on which the time difference correction process has been performed together with state detection results. As described with reference to Fig. 19, in a case where there is the time difference illustrated in Fig. 19 between the detection signal SC and the detection signal SR, "2" is added to the frame numbers of the detection signal SR since the time difference correction amount EC is set to "2", thereby generating the detection signal SRh illustrated in (f) of Fig. 20. By performing such a process, the time difference between the detection signal SC and the detection signal SR can be corrected.

Note that the case where the three states of the calibration target 20 are repeated in a predetermined period has been exemplified in the above operation examples, but if the number of states of the calibration target 20 is increased and the states are repeated in a predetermined period, temporal misalignment of three or more frames can be corrected.

As described above, according to the second embodiment, temporal misalignment between the detection signals acquired by the plurality of sensors can be corrected even in a case where the temporal misalignment is larger than that in the first embodiment.

<4. Third Embodiment>

Although the case where the imaging unit and the radar unit are used has been described in the above-described embodiments, a lidar unit 41L using a lider sensor may further be used as the active sensor. The lidar radiates laser light and generates a detection signal on the basis of the laser light (reflection light) reflected by the calibration target.

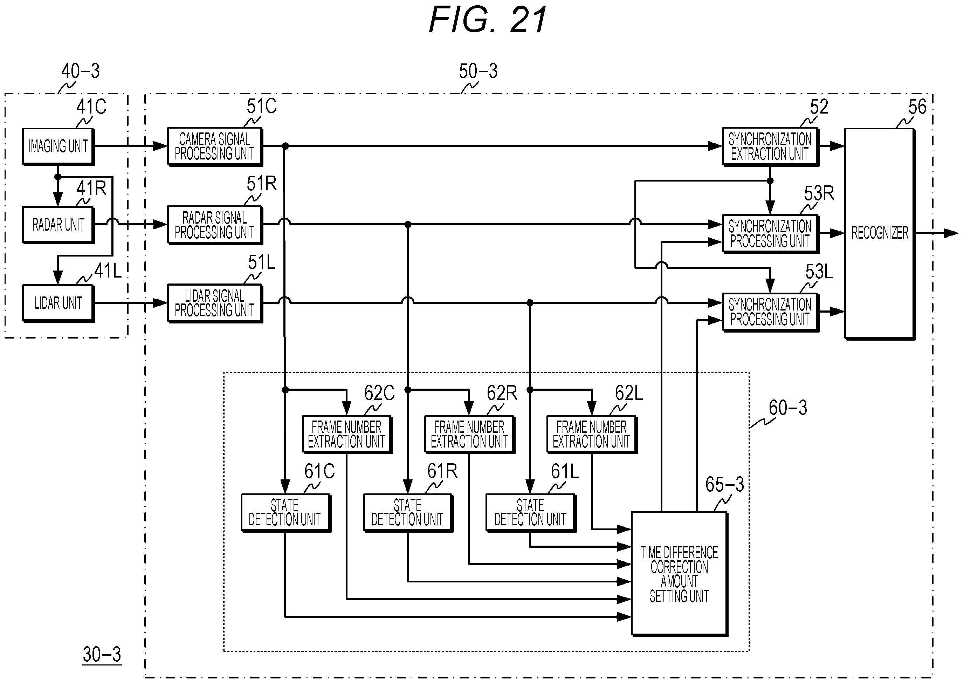

Fig. 21 exemplifies a configuration of an information processing apparatus in a third embodiment. An information processing apparatus 30-3 includes a sensor unit 40-3 and a signal processing unit 50-3.

The sensor unit 40-3 includes the imaging unit 41C, the radar unit 41R, and the lidar unit 41L. The imaging unit 41C generates a detection signal indicating an imaged image of the calibration target for each frame and outputs the detection signal to the signal processing unit 50-3. The radar unit 41R generates a detection signal for each frame on the basis of a reflection beam and outputs the detection signal to the signal processing unit 50-3. The lidar unit 41L generates a detection signal for each frame on the basis of reflection light and outputs the detection signal to the signal processing unit 50-3. Furthermore, the detection signals generated by the imaging unit 41C, the radar unit 41R, and the lidar unit 41L include frame information (for example, frame numbers) with which frames can be identified.

The signal processing unit 50-3 includes the camera signal processing unit 51C, the radar signal processing unit 51R, a lidar signal processing unit 51L, the synchronization extraction unit 52, synchronization processing units 53R and 53L, the recognizer 55, and a calibration unit 60-3.

The camera signal processing unit 51C performs a camera signal process, for example, at least one of a noise removal process, a gain adjustment process, a defective pixel correction process, a demosaic process, a color adjustment process, or the like, with respect to the detection signal supplied from the imaging unit 41C. The camera signal processing unit 51C outputs the processed detection signal to the synchronization extraction unit 52 and the calibration unit 60-1.

On the basis of the detection signal from the radar unit 41R, the radar signal processing unit 51R calculates a relative distance and a relative speed with respect to the calibration target on the basis of a difference between the frequency of the reflection beam and the frequency of a transmission beam. Furthermore, a direction of the calibration target is calculated on the basis of a phase difference between receiving array antennas of the reflection beam. The radar signal processing unit 51R outputs the processed detection signal to the synchronization processing unit 53 and the calibration unit 60-1.

On the basis of the detection signal from the lidar unit 41L, the lidar signal processing unit 51L calculates a relative distance and a relative speed with respect to the calibration target on the basis of emission timing of the laser light, and a result of reception of the reflection light. Furthermore, a direction of the calibration target is calculated on the basis of a radiation direction of the laser light and the reflection light. The lidar signal processing unit 51L outputs the processed detection signal to the synchronization processing unit 53L and the calibration unit 60-3.

The synchronization extraction unit 52 extracts frame numbers from the detection signal and outputs the frame numbers to the synchronization processing units 53R and 53L. Furthermore, the synchronization extraction unit 52 may extract the frame numbers and a synchronization signal from the detection signal and output the frame numbers and the synchronization signal to the synchronization processing units 53R and 53L. Furthermore, the synchronization extraction unit 52 outputs the detection signal supplied from the camera signal processing unit 51C to a recognizer 56.

The synchronization processing unit 53R corrects the frame numbers of the detection signal supplied from the radar signal processing unit 51R on the basis of the frame numbers supplied from the synchronization extraction unit 52 and a time difference correction amount ECr set by the calibration unit 60-3, and outputs the corrected detection signal to the recognizer 56. Furthermore, in a case where the synchronization signal is supplied from the synchronization extraction unit 52, the synchronization processing unit 53 may output the detection signal of which the frame numbers have been corrected to the recognizer 56 at timing equal to that of the detection signal output from the synchronization extraction unit 52 to the recognizer 56 by synchronizing these detection signals, that is, by matching the frame numbers of these detection signals.

The synchronization processing unit 53L corrects the frame numbers of the detection signal supplied from the lidar signal processing unit 51L on the basis of the frame numbers supplied from the synchronization extraction unit 52 and a time difference correction amount ECl set by the calibration unit 60-3, and outputs the corrected detection signal to the recognizer 56. Furthermore, in a case where the synchronization signal is supplied from the synchronization extraction unit 52, the synchronization processing unit 53L may output the detection signal of which the frame numbers have been corrected to the recognizer 56 at timing equal to that of the detection signal output from the synchronization extraction unit 52 to the recognizer 56 by synchronizing these detection signals, that is, by matching the frame numbers of these detection signals.

The recognizer 56 performs a subject recognition process on the basis of the detection signal supplied from the synchronization extraction unit 52 and the detection signals supplied from the synchronization processing units 53R and 53L, temporal misalignment in the detection signals having been corrected.

The calibration unit 60-3 sets the time difference correction amounts ECr and ECl using the detection signals generated by the imaging unit 41C, the radar unit 41R, and the lidar unit 41L. The calibration unit 60-1 includes state detection units 61C, 61R, and 61L, frame number extraction units 62C, 62R, and 62L, and a time difference correction amount setting unit 65-3.

The state detection unit 61C detects a state of the calibration target on the basis of the detection signal supplied from the camera signal processing unit 51C. For example, the state detection unit 61C performs image recognition using the detection signal, detects a state, i.e., whether the reflector 21 is not hidden or is hidden by the radio wave absorber 22 in the calibration target 20, and outputs a result of the detection to the time difference correction amount setting unit 65-3.

The state detection unit 61R detects a state of the calibration target on the basis of the detection signal supplied from the radar signal processing unit 51R. For example, the state detection unit 61R detects which of the reflectors 21a, 21b, or 21c is selected in the calibration target 20 on the basis of a signal level of the detection signal, and outputs a result of the detection to the time difference correction amount setting unit 65-3.

The state detection unit 61L detects a state of the calibration target on the basis of the detection signal supplied from the lidar signal processing unit 51L. For example, the state detection unit 61L detects which of the reflectors 21a, 21b, or 21c is selected in the calibration target 20 on the basis of a signal level of the detection signal, and outputs a result of the detection to the time difference correction amount setting unit 65-3.

The frame number extraction unit 62C extracts frame numbers from the detection signal supplied from the camera signal processing unit 51C and outputs the frame numbers to the time difference correction amount setting unit 65-3.

The frame number extraction unit 62R extracts frame numbers from the detection signal supplied from the radar signal processing unit 51R and outputs the frame numbers to the time difference correction amount setting unit 65-3.

The frame number extraction unit 62L extracts frame numbers from the detection signal supplied from the lidar signal processing unit 51L and outputs the frame numbers to the time difference correction amount setting unit 65-3.

With the use of any one of the detection signals each generated by one of the plurality of sensors, for example, the detection signal SC, as reference, the time difference correction amount setting unit 65-1 calculates a time difference ERr in the detection signal SR with respect to the detection signal SC as reference and a time difference ERl in the detection signal SL with respect to the detection signal SC by using state detection results of respective frames in the state detection units 61C, 61R, and 61L. Regarding the calculation of the time difference ERr, for example, the frame numbers supplied from the frame number extraction units 62C and 62R are used, and a difference in the frame numbers when there occurs an equal change in the state of the calibration target is defined as the time difference ERr. Regarding the calculation of the time difference ERl, for example, the frame numbers supplied from the frame number extraction units 62C and 62L are used, and a difference in the frame numbers when there occurs an equal change in the state of the calibration target is defined as the time difference ERl. The time difference correction amount setting unit 65-1 sets each of the time difference correction amount ECr for the detection signal SR on the basis of the calculated time difference ERr and the time difference correction amount ECl for the detection signal SL on the basis of the calculated time difference ERl.

Next, an operation of the third embodiment will be described. In the third embodiment, similarly to the first embodiment, the detection signal acquisition process illustrated in Fig. 5 is performed to acquire a detection signal for the determination target period. Note that the determination target period is a period of time longer than the state switching period of the calibration target 20. Furthermore, in the third embodiment, the time difference correction amount setting process is performed, the time difference ERr is calculated by using a frame number of the detection signal SR indicating a change in the state detection result of the calibration target 20 equal to that in the detection signal SC, and setting of the time difference correction amount ECr, setting of the calibration success flag, and the like are performed. Furthermore, in the third embodiment, the time difference ERl is calculated by using a frame number of the detection signal SL indicating a change in the state detection result of the calibration target 20 equal to that in the detection signal SC, and setting of the time difference correction amount ECl, setting of the calibration success flag, and the like are performed.

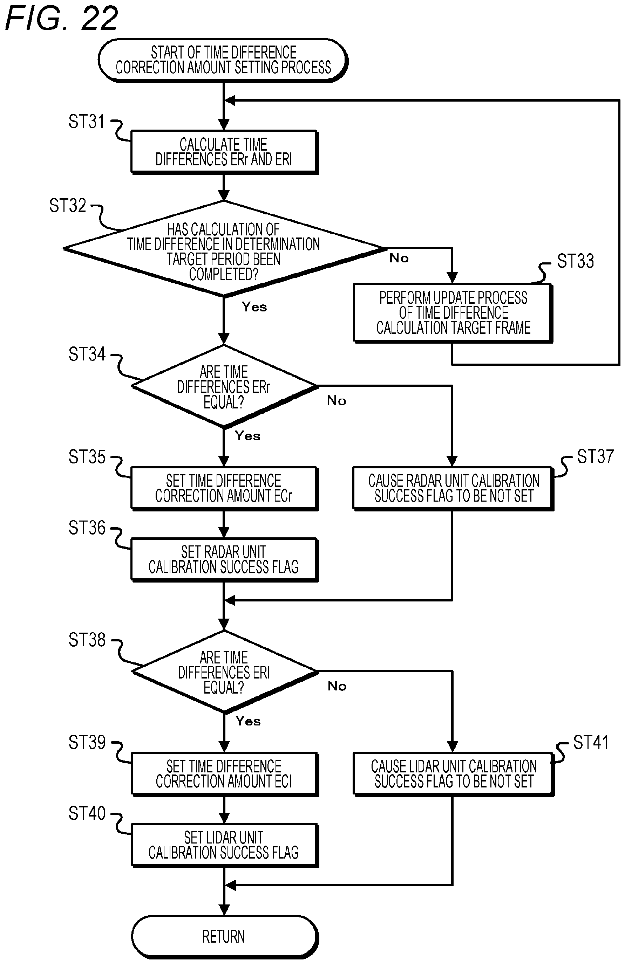

Fig. 22 is a flowchart exemplifying the time difference correction amount setting process in the third embodiment. Note that the time difference correction amount setting process corresponds to the process of step ST5 in Fig. 3.

In step ST31, the information processing apparatus calculates the time differences ERr and ERl. Regarding a time difference calculation target frame of the detection signal generated by the imaging unit 41C, the time difference correction amount setting unit 65-3 in the calibration unit 60 of the information processing apparatus 30-3 calculates the time difference ERr from the detection signal generated by the radar unit 41R, the time difference ERl from the detection signal generated by the lidar unit 41L on the basis of the state detection results. Note that the time difference calculation target frame is a frame when the state detection result of the calibration target 20 changes.

The time difference correction amount setting unit 65-3 performs a process similar to that in step ST21 of Fig. 6 described above, and calculates the time difference ERr in the detection signal SR with respect to the detection signal SC. Furthermore, a process similar to the calculation of the time difference in the detection signal SR with respect to the detection signal SC is performed, and the time difference ERl in the detection signal SL with respect to the detection signal SC is calculated. The time difference correction amount setting unit 65-3 sets each of the time difference correction amount ECr for the detection signal SR and the time difference correction amount ECl for the detection signal SL on the basis of the calculated time differences, and proceeds to step ST32.

In step ST32, the information processing apparatus determines whether or not the calculation of the time difference in the determination target period has been completed. The time difference correction amount setting unit 65-3 of the information processing apparatus 30-3 proceeds to step ST33 if the calculation of the time difference, which is performed for each frame in which the state detection result has changed in the determination target period, has not been completed, and proceeds to step ST34 if the calculation of the time difference, which is performed for each frame in which the state detection result has changed, has been completed.

In step ST33, the information processing apparatus performs an update process of the time difference calculation target frame. The time difference correction amount setting unit 65-3 of the information processing apparatus 30-3 sets the time difference calculation target frame to a next frame in the detection signal SC in which the state detection result of the calibration target 20 has changed, and returns to step ST31.

In step ST34, the information processing apparatus determines whether or not the calculated time differences ERr are equal. The time difference correction amount setting unit 65-3 of the information processing apparatus 30-3 proceeds to step ST35 if it is determined that the time differences ERr are equal, and proceeds to step ST37 if a frame indicating a different time difference ERr is included.

In step ST35, the information processing apparatus sets a time difference correction amount. On the basis of the time difference ERr calculated in step ST31, the time difference correction amount setting unit 65-3 of the information processing apparatus 30-3 sets the time difference correction amount ECr with which a frame number of the detection signal SR indicating a change in the state detection result of the calibration target 20 equal to that in the detection signal SC is made equal to a corresponding frame number of the detection signal SC, and proceeds to step ST36.

In step ST36, the information processing apparatus sets a radar unit calibration success flag. Because the setting of the time difference correction amount ECr with respect to the detection signal SR has been completed, the time difference correction amount setting unit 65-3 of the information processing apparatus 30-3 sets the radar unit calibration success flag to the set state (on state), and proceeds to step ST38.

In step ST37, the information processing apparatus causes the radar unit calibration success flag to be not set. The time difference correction amount setting unit 65-3 of the information processing apparatus 30-3 does not perform the setting of the time difference correction amount ECr with respect to the detection signal SR because a frame indicating a different time difference ERr is included, and thus the time difference correction amount setting unit 65-3 of the information processing apparatus 30-3 sets the radar unit calibration success flag to the non-set state (off state), and proceeds to step ST38.

In step ST38, the information processing apparatus determines whether or not the time differences ERl are equal. The time difference correction amount setting unit 65-3 of the information processing apparatus 30-3 proceeds to step ST39 if it is determined that the time differences ERl are equal, and proceeds to step ST41 if a frame indicating a different time difference ERl is included.

In step ST39, the information processing apparatus sets the time difference correction amount ECl. On the basis of the time difference ERl calculated in step ST31, the time difference correction amount setting unit 65-3 of the information processing apparatus 30-3 sets the time difference correction amount ECl with which a frame number of the detection signal SL indicating a change in the state detection result of the calibration target 20 equal to that in the detection signal SC is made equal to a corresponding frame number of the detection signal SC, and proceeds to step ST40.

In step ST40, the information processing apparatus sets the calibration success flag with respect to the detection signal SL. Because the setting of the time difference correction amount ECl has been completed, the time difference correction amount setting unit 65-3 of the information processing apparatus 30-3 sets the calibration success flag with respect to the detection signal SL to the set state (on state), and ends the process.

In step ST41, the information processing apparatus causes the calibration success flag to be not set with respect to the detection signal SL. The time difference correction amount setting unit 65-3 of the information processing apparatus 30-3 does not perform the setting of the time difference correction amount ECl with respect to the detection signal SL because a frame indicating a different time difference is included, and thus the time difference correction amount setting unit 65-3 of the information processing apparatus 30-3 sets the calibration success flag with respect to the detection signal SL to the non-set state (off state), and ends the process.

Next, an operation of the third embodiment will be described. In the third embodiment, similarly to the first embodiment and the second embodiment, the detection signal acquisition process illustrated in Fig. 5 is performed to acquire a detection signal for the determination target period. Note that the determination target period is a period of time longer than the state switching period of the calibration target 20. Furthermore, in the third embodiment, the time difference correction amount setting process illustrated in Fig. 22 is performed, the time difference ERr is calculated by using a frame number of the detection signal SR indicating a change in the state detection result of the calibration target 20 equal to that in the detection signal SC, and on the basis of the calculated time difference ERr, setting of the time difference correction amount ECr is performed, and setting of the calibration success flag with respect to the detection signal SR, and the like are performed. Moreover, the time difference ERl is calculated by using a frame number of the detection signal SL indicating a change in the state detection result of the calibration target 20 equal to that in the detection signal SC, and on the basis of the calculated time difference ERl, setting of the time difference correction amount ECl is performed, and setting of the calibration success flag with respect to the detection signal SL, and the like are performed.

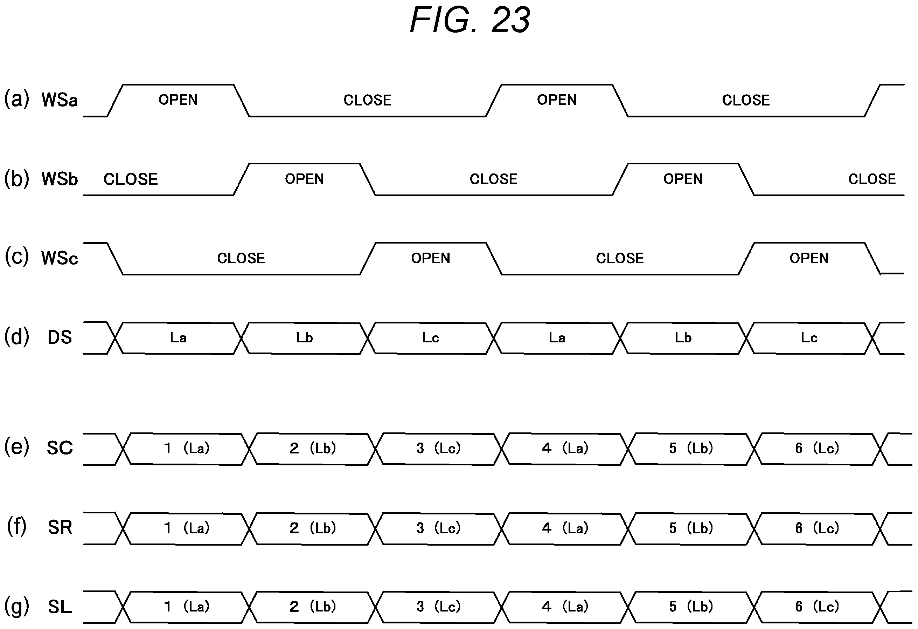

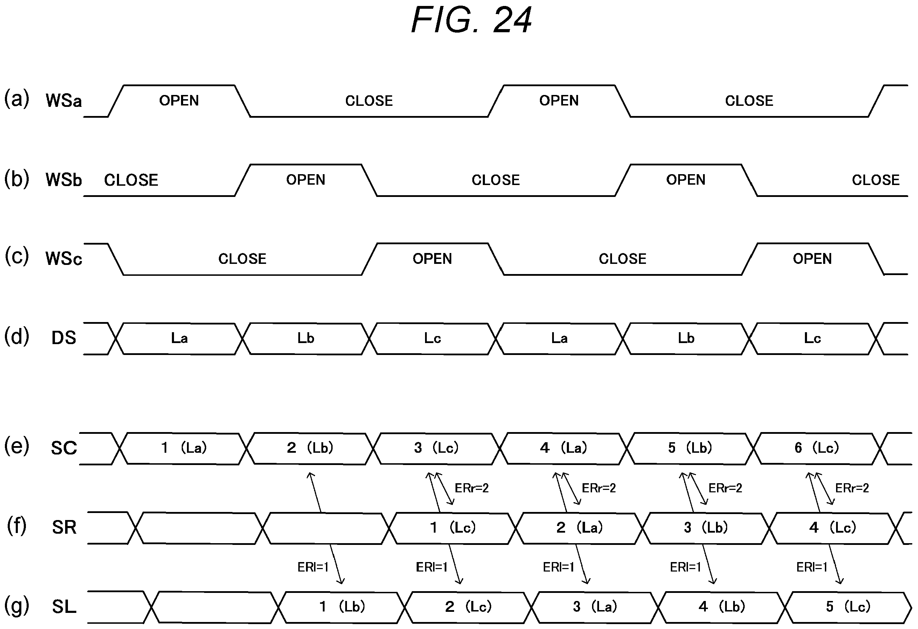

Next, operation examples of the third embodiment will be described with reference to Figs. 23 to 25. Fig. 23 is a diagram illustrating a first operation example in the third embodiment, and Fig. 24 is a diagram illustrating a second operation example in the third embodiment. In each of the first operation example and the second operation example, a case is exemplified where the periods of the two states of the calibration target 20 are each a one-frame period of the detection signals SC and SR.

The first operation example illustrated in Fig. 23 illustrates a case where the detection signal generated by the imaging unit 41C and the detection signal generated by the radar unit 41R are synchronized. (a) of Fig. 23 illustrates the state WSa of the reflector 21a in the calibration target 20, and the state where the reflector 21a is not hidden by the radio wave absorber 22a is denoted by "OPEN", and the state where the reflector 21a is hidden by the radio wave absorber 22a is denoted by "CLOSE". (b) of Fig. 23 illustrates the state WSb of the reflector 21b in the calibration target 20, and the state where the reflector 21b is not hidden by the radio wave absorber 22b is denoted by "OPEN", and the state where the reflector 21b is hidden by the radio wave absorber 22b is denoted by "CLOSE". (c) of Fig. 23 illustrates the state WSc of the reflector 21c in the calibration target 20, and the state where the reflector 21c is not hidden by the radio wave absorber 22c is denoted by "OPEN", and the state where the reflector 21c is hidden by the radio wave absorber 22c is denoted by "CLOSE". In that case, the state switching period of the calibration target 20 is a three-frame period.

(d) of Fig. 23 illustrates the indication information DS of the indicator 23. For example, the indication La indicates that only the reflector 21a is not hidden by the radio wave absorber 22a, and the reflectors 21b and 21c are hidden by the radio wave absorbers 22b and 22c, respectively. The indication Lb indicates that only the reflector 21b is not hidden by the radio wave absorber 22b, and the reflectors 21a and 21c are hidden by the radio wave absorbers 22a and 22c, respectively. The indication Lc indicates that only the reflector 21c is not hidden by the radio wave absorber 22c, and the reflectors 21a and 21b are hidden by the radio wave absorbers 22a and 22b, respectively.

(e) of Fig. 23 illustrates the detection signal SC generated by the imaging unit 41C together with state detection results. Furthermore, (f) of Fig. 23 illustrates the detection signal SR generated by the radar unit 41R together with state detection results. Moreover, (g) of Fig. 23 illustrates the detection signal SL generated by the lidar unit 41L together with state detection results. Note that in Fig. 23 and Figs. 24 and 25 as described later, the reference sign (La) indicates that an indication recognition result of the indicator 23 is the indication La, the reference sign (Lb) indicates that an indication recognition result is the indication Lb, and the reference sign (Lc) indicates that an indication recognition result of the indicator 23 is the indication Lc.

In a case where the detection signal SC generated by the imaging unit 41C, the detection signal SR generated by the radar unit 41R, and the detection signal SL generated by the lidar unit 41L are synchronized, the frame numbers of the detection signal SC, the detection signal SR, and the detection signal SL when there occurs an equal change in the state of the calibration target 20 are equal. Therefore, the time difference correction amounts ECr and ECl are "0".

The second operation example illustrated in Fig. 24 illustrates a case where there is temporal misalignment between the detection signal generated by the imaging unit 41C and the detection signal generated by the radar unit 41R and there is temporal misalignment between the detection signal generated by the imaging unit 41C and the detection signal generated by the lidar unit 41L. Note that (a) of Fig. 24 is similar to (a) of Fig. 23, and (b) to (d) of Fig. 24 are similar to (b) to (d) of Fig. 23, and thus descriptions thereof will be omitted.

(e) of Fig. 24 illustrates the detection signal SC generated by the imaging unit 41C together with state detection results. Furthermore, (f) of Fig. 24 illustrates the detection signal SR generated by the radar unit 41R together with state detection results, and (g) of Fig. 24 illustrates the detection signal SL generated by the lidar unit 41L together with state detection results.

In a case where there is a time difference in the detection signal SR generated by the radar unit 41R and the detection signal SL generated by the lidar unit 41L with respect to the detection signal SC generated by the imaging unit 41C, frame numbers which indicate an equal change in the state detection results of the calibration target 20 may differ between the detection signal SC and the detection signal SR, and between the detection signal SC and the detection signal SL. For example, frame number 3 is a frame in which the state detection result based on the detection signal SC has changed from the indication Lb to the indication Lc, whereas a frame in which the state detection result based on the detection signal SR has changed from the indication Lb to the indication Lc is frame number 1, and therefore, the time difference ERr is "2". Furthermore, frame number 4 is a frame in which the state detection result based on the detection signal SC has changed from the indication Lc to the indication La, whereas a frame in which the state detection result based on the detection signal SR has changed from the indication Lc to the indication La is frame number 2, and therefore, the time difference ERr is "2". Moreover, frame number 5 is a frame in which the state detection result based on the detection signal SC has changed from the indication La to the indication Lb, whereas a frame in which the state detection result based on the detection signal SR has changed from the indication La to the indication Lb is frame number 3, and therefore, the time difference ERr is "2". As described above, since the time difference ERr is "2", the time difference correction amount ECr with respect to the detection signal SR is set to "2". Furthermore, when the time difference correction amount ECr is set, the radar unit calibration success flag is set to the set state by the time difference correction amount setting process illustrated in Fig. 22.

Frame number 2 is a frame in which the state detection result based on the detection signal SC has changed from the indication La to the indication Lb, whereas a frame in which the state detection result based on the detection signal SL has changed from the indication La to the indication Lb is frame number 1, and therefore, the time difference ERl is "1". Furthermore, frame number 3 is a frame in which the state detection result based on the detection signal SC has changed from the indication Lb to the indication Lc, whereas a frame in which the state detection result based on the detection signal SL has changed from the indication Lb to the indication Lc is frame number 2, and therefore, the time difference ERl is "1". Moreover, frame number 4 is a frame in which the state detection result based on the detection signal SC has changed from the indication Lc to the indication La, whereas a frame in which the state detection result based on the detection signal SL has changed from the indication Lc to the indication La is frame number 3, and therefore, the time difference ERl is "1". As described above, since the time difference ERl is "1", the time difference correction amount ECl with respect to the detection signal SL is set to "1". Furthermore, when the time difference correction amount ECr is set, the lidar unit calibration success flag is set to the set state by the time difference correction amount setting process illustrated in Fig. 22.

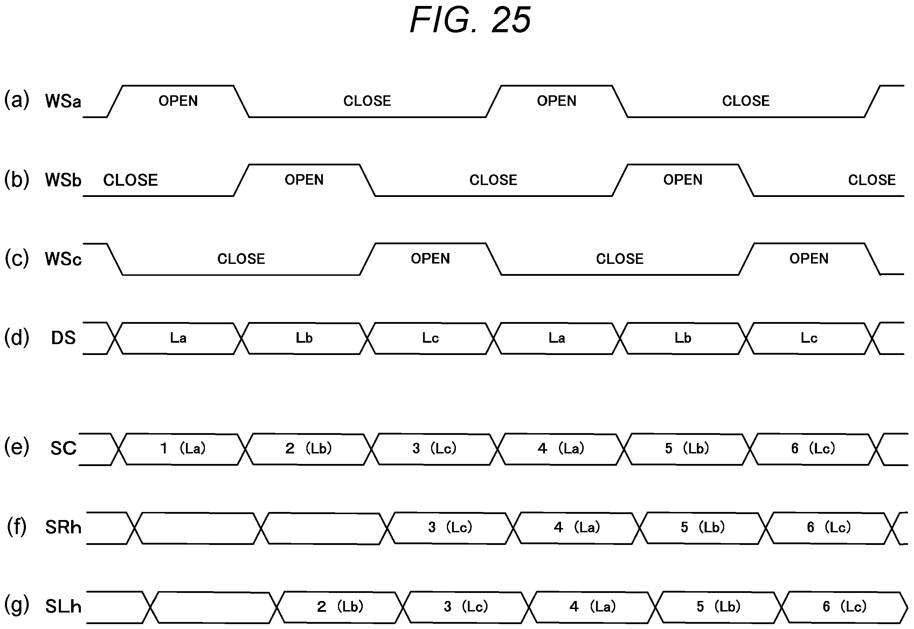

Fig. 25 illustrates the second operation example after calibration, and the time difference correction process has been performed on the detection signal SR generated by the radar unit 41R and the detection signal SL generated by the lidar unit 41L using the detection signal SC generated by the imaging unit 41C as reference. Note that (a) of Fig. 25 is similar to (a) of Fig. 23, and (b) to (d) of Fig. 25 are similar to (b) to (d) of Fig. 23, and thus descriptions thereof will be omitted.

(e) of Fig. 25 illustrates the detection signal SC generated by the imaging unit 41C together with state detection results. Furthermore, (f) of Fig. 25 illustrates the detection signal SRh on which the time difference correction process has been performed together with state detection results. Moreover, (g) of Fig. 25 illustrates the detection signal SLh on which the time difference correction process has been performed together with state detection results. As described with reference to Fig. 24, in a case where there is the time difference illustrated in Fig. 24 between the detection signal SC and the detection signal SR, and between the detection signal SC and the detection signal SL, "2" is added to the frame numbers of the detection signal SR since the time difference correction amount ECr with respect to the detection signal SR is set to "2", thereby generating the detection signal SRh illustrated in (f) of Fig. 25. Furthermore, "1" is added to the frame numbers of the detection signal SL since the time difference correction amount ECl with respect to the detection signal SL is set to "1", thereby generating the detection signal SLh illustrated in (g) of Fig. 25. By performing such a process, the time difference between the detection signal SC and each of the detection signal SR and the detection signal SL can be corrected.

As described above, according to the third embodiment, temporal misalignment between the detection signals acquired by the plurality of sensors can be corrected by setting the time difference correction amount on the basis of the state detection results of the calibration target, similarly to the first embodiment. Furthermore, if a recognition process is performed using not only the detection signal SC but also the corrected detection signal SRh when the radar unit calibration success flag is in the set state, the recognition process can be performed accurately. Similarly, if a recognition process is performed using not only the detection signal SC but also the corrected detection signal SLh when the lidar unit calibration success flag is in the set state, the recognition process can be performed accurately. Furthermore, since the radar unit calibration success flag is in the non-set state in a case where the temporal misalignment in the detection signal SR cannot be corrected, and the lidar unit calibration success flag is in the non-set state in a case where the temporal misalignment in the detection signal SL cannot be corrected, it is possible to prevent problems resulting from the use of the detection signal including the temporal misalignment, for example, a decrease in object recognition accuracy, from occurring, if the recognizer 55 performs a recognition process using the detection signal SC and a detection signal in which the calibration success flag is in the set state, or any one of the detection signals in a case where all the calibration success flags are in the non-set state.

## <5. Modifications>

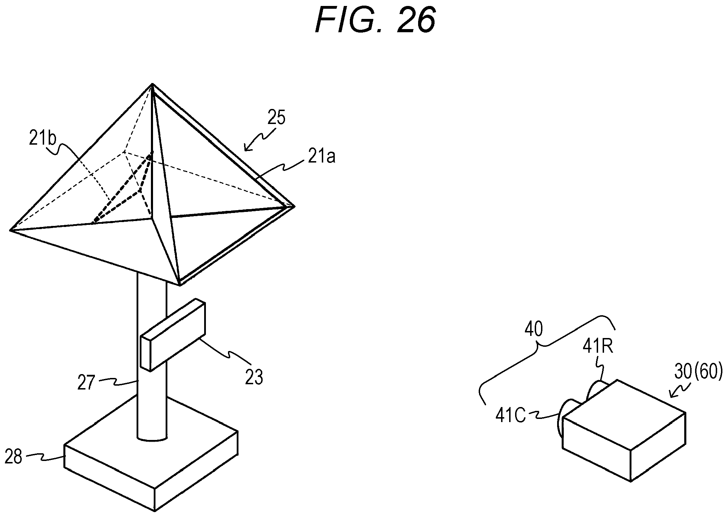

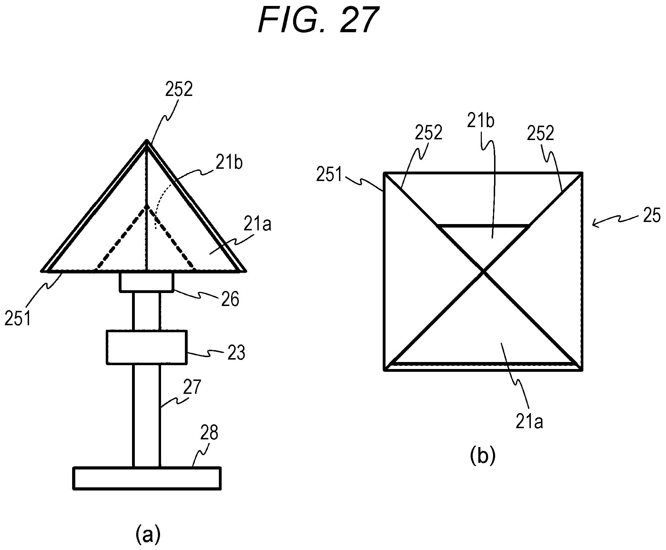

In the above-described embodiments, the case has been exemplified where the calibration target 20 includes a reflector and a radio wave absorber, and the states of the calibration target 20 are switched by opening and closing the radio wave absorber, but the calibration target 20 is not limited to such a configuration and operation. Figs. 26 and 27 each exemplify another configuration of the calibration target, Fig. 26 is a perspective view illustrating the other configuration of the calibration target, and Fig. 27 is a set of a front view and a top view of the other configuration of the calibration target.

A calibration target 20e includes a rotating body 25, a rotary drive unit 26 which drives the rotating body 25, a support post 27, and a pedestal 28. The rotating body 25 is attached to the support post 27 via the rotary drive unit 26, and is rotatable by the rotary drive unit 26 with the support post 27 as a rotation axis. Furthermore, the support post 27 is attached to the pedestal 28, and the support post 27 includes the indicator 23 with an indication surface thereof facing a direction of the imaging unit 41C.

The rotating body 25 includes a bottom portion 251 in a rectangular shape and a partition plate 252 extending in a rotation axis direction from a diagonal position of the bottom portion 251. Furthermore, the partition plate 252 includes a member which does not reflect the transmission beam. A reflector is arranged in a region partitioned by the partition plate 252 with a transmission beam incident surface thereof facing outward. For example, in Figs. 26 and 27, the two reflectors 21a and 21b having different radar cross-sections are each arranged in a target region around the rotation axis with the transmission beam incident surface thereof facing outward.

In a case where such a calibration target 20e is used, rotating the rotating body 25 causes switching of a reflector corresponding to the radar unit 41R, which makes it possible to perform switching between the states of the calibration target. Furthermore, regarding the calibration target 20e, the states of the calibration target can be switched simply by rotating the rotating body 25 without opening or closing a radio wave absorber, so that the states of the calibration target can be switched easily and at high speed.

By the way, in the above-described embodiments, the states of the calibration target 20 are switched in a predetermined period, and therefore, if a time difference is shorter than the predetermined period, the time difference can be calculated correctly since there is one state change in the predetermined period, the state change indicating a state detection result equal to that based on the detection signal SC. However, in a case where the time difference is equal to or longer than the predetermined period, if a state change which indicates an equal state detection result is detected in a frame in which a difference in frame numbers is shorter than the time difference, a shorter time difference is detected.

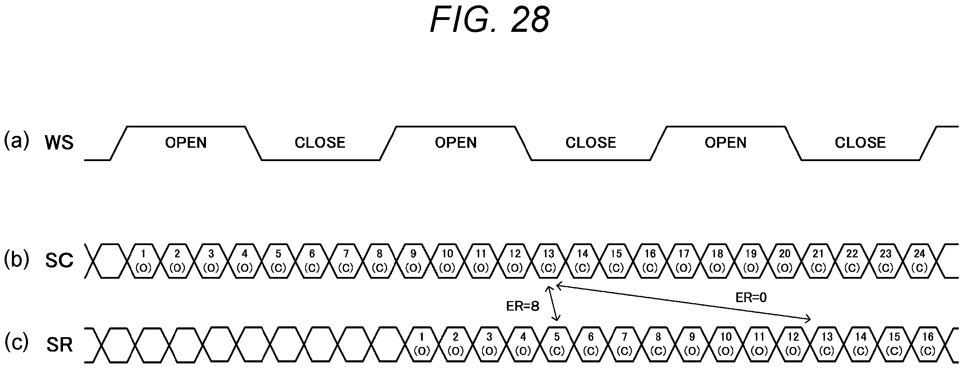

Fig. 28 exemplifies a case where a time difference is equal to or longer than the state switching period of the calibration target. (a) of Fig. 28 illustrates the state WS of the calibration target 20, and the state where the reflector 21 is not hidden by the radio wave absorber 22 is denoted by "OPEN" and the state where the reflector 21 is hidden by the radio wave absorber 22 is denoted by "CLOSE". Furthermore, the state switching period of the calibration target 20 is a two-frame period.

(b) of Fig. 28 illustrates frame numbers and state detection results of the detection signal SC generated by the imaging unit 41C. Furthermore, (c) of Fig. 28 illustrates frame numbers and state detection results of the detection signal SR generated by the radar unit 41R, and there is a time difference (corresponding to the state switching period) of, for example, eight frames with respect to the detection signal SC.

In that case, frame number 13 is a frame in which the state detection result based on the detection signal SC has changed from the OPEN state to the CLOSE state, whereas frames in which the state detection result based on the detection signal SR has changed from the OPEN state to the CLOSE state are frame number 5 and frame number 13, and due to the same frame number 13 and an equal change in the state detection results, there is a possibility that the time difference is determined as "0".

Therefore, regarding the calibration target, the time difference equal to or longer than the predetermined period may be correctly detectable by performing switching of the state WS randomly, for example, in units of one or multiple frames of the detection signals. For example, by randomly setting, in units of frames, a period in which the reflector 21 is not hidden by the radio wave absorber 22 and a period in which the reflector 21 is hidden by the radio wave absorber 22, or by randomly selecting the reflector 21a, 21b, or 21c, the time difference correction amount setting unit 65-1 detects, from the detection signal generated by the radar unit 41R, a frame in which there has occurred a change equal to a state change in a time difference calculation target frame, regarding time difference calculation target frames of the detection signal generated by the imaging unit 41C. Moreover, the time difference correction amount setting unit 65-1 calculates a time difference which is a difference in frame numbers between the frames in which there has occurred a change equal to the state change, and sets a time difference correction amount by employing a time difference which is constant among time differences calculated in respective time difference calculation target frames as a time difference between the detection signal SC and the detection signal SR. If such a process is performed, even if long temporal misalignment occurs, the temporal misalignment can be corrected.

Furthermore, the configurations of the calibration units 60-1 and 60-3 are not limited to the above-described configurations, and may include, for example, the synchronization extraction unit 52 and the synchronization processing unit 53, or the synchronization processing units 53R and 53L.

Furthermore, as indicated in the first to third embodiments, the plurality of sensors is not limited to an active sensor and a passive sensor, and is only required to include at least an active sensor, and a plurality of active sensors may be used. For example, the plurality of sensors may include the radar unit 41R and the lidar unit 41L, a time difference may be calculated as described above using either one thereof as reference, and a detection signal of the other thereof may be synchronized with a detection signal of one thereof.

Note that the effects described in the first to third embodiments and modifications are merely examples and are not limited, and there may be additional effects.

<6. Exemplary Applications>

The technology according to the present disclosure can be applied to various products. For example, the technology according to the present disclosure may be realized as a device mounted on any type of moving object such as an automobile, an electric vehicle, a hybrid electric vehicle, a motorcycle, a bicycle, a personal mobility, an airplane, a drone, a ship, a robot, a construction machine, or an agricultural machine (tractor).

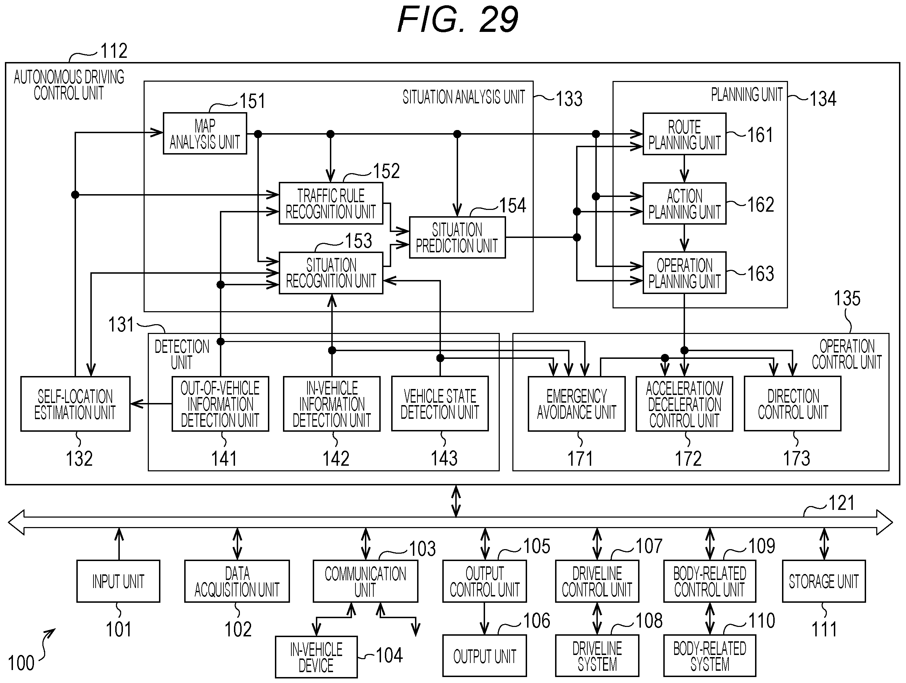

Fig. 29 is a block diagram illustrating a schematic example configuration of functions of a vehicle control system 100 which is an example of a moving object control system to which the present technology can be applied.

Note that hereinafter, in a case where a vehicle which includes the vehicle control system 100 installed therein is distinguished from other vehicles, the vehicle is referred to as a system-installed car or a system-installed vehicle.

The vehicle control system 100 includes an input unit 101, a data acquisition unit 102, a communication unit 103, an in-vehicle device 104, an output control unit 105, an output unit 106, a driveline control unit 107, a driveline system 108, a body-related control unit 109, a body-related system 110, a storage unit 111, and an autonomous driving control unit 112. The input unit 101, the data acquisition unit 102, the communication unit 103, the output control unit 105, the driveline control unit 107, the body-related control unit 109, the storage unit 111, and the autonomous driving control unit 112 are interconnected via a communication network 121. The communication network 121 includes, for example, an on-board communication network or a bus that conforms to any standard such as controller area network (CAN), local interconnect network (LIN), local area network (LAN), or FlexRay (registered trademark). Note that respective components of the vehicle control system 100 may be directly connected without via the communication network 121.

Note that hereinafter, in a case where the respective components of the vehicle control system 100 perform communication via the communication network 121, the description of the communication network 121 shall be omitted. For example, in a case where the input unit 101 and the autonomous driving control unit 112 communicate with each other via the communication network 121, it will be simply described that the input unit 101 and the autonomous driving control unit 112 communicate with each other.

The input unit 101 includes a device used by an occupant for inputting various data, instructions, and the like. For example, the input unit 101 includes an operation device such as a touch panel, a button, a microphone, a switch, and a lever, and an operation device with which non-manual input can be performed by voice, gesture, or the like. Furthermore, the input unit 101 may be, for example, a remote control device using infrared rays or other radio waves, or an externally connected device such as a mobile device or a wearable device adaptive to the operation of the vehicle control system 100. The input unit 101 generates an input signal on the basis of data, instructions, or the like input by the occupant, and supplies the input signal to the respective components of the vehicle control system 100.

The data acquisition unit 102 includes various sensors and the like which acquire data used for processing by the vehicle control system 100, and supplies the acquired data to the respective components of the vehicle control system 100.

For example, the data acquisition unit 102 includes various sensors for detecting the state of the system-installed car and the like. Specifically, the data acquisition unit 102 includes, for example, a gyro sensor, an acceleration sensor, an inertial measurement unit (IMU), and a sensor for detecting an operation amount of the accelerator pedal, an operation amount of the brake pedal, a steering angle of the steering wheel, engine speed, motor speed, or rotation speed of the wheels, or the like.

Furthermore, the data acquisition unit 102 includes, for example, various sensors for detecting information regarding the outside of the system-installed car. Specifically, the data acquisition unit 102 includes, for example, an imaging device such as a time-of-flight (ToF) camera, a stereo camera, a monocular camera, an infrared camera, and other cameras. Furthermore, the data acquisition unit 102 includes, for example, an environment sensor for detecting the weather, meteorological phenomena, or the like, and a surrounding information detection sensor for detecting an object around the system-installed car. The environment sensor includes, for example, a raindrop sensor, a fog sensor, a sunshine sensor, or a snow sensor. The surrounding information detection sensor includes, for example, an ultrasonic sensor, a radar, a light detection and ranging/laser imaging detection and ranging (LiDAR), or a sonar.

Moreover, the data acquisition unit 102 includes, for example, various sensors for detecting a current location of the system-installed car. Specifically, the data acquisition unit 102 includes, for example, a global navigation satellite system (GNSS) receiver which receives a GNSS signal from a GNSS satellite, or the like.

Furthermore, the data acquisition unit 102 includes, for example, various sensors for detecting information regarding the inside of the vehicle. Specifically, the data acquisition unit 102 includes, for example, an imaging device which images a driver, a biosensor which detects the driver's biological information, a microphone which collects sound in the vehicle interior, and the like. The biosensor is provided, for example, on a seat surface or the steering wheel, and detects biological information associated with the occupant sitting on a seat or the driver holding the steering wheel.

The communication unit 103 communicates with the in-vehicle device 104 and various devices, servers, base stations, and the like outside the vehicle, transmits data supplied from the respective components of the vehicle control system 100, and supplies received data to the respective components of the vehicle control system 100. Note that a communication protocol supported by the communication unit 103 is not particularly limited, and furthermore, the communication unit 103 can support a plurality of types of communication protocols. For example, the communication unit 103 performs wireless communication with the in-vehicle device 104 by using wireless LAN, Bluetooth (registered trademark), near field communication (NFC), wireless USB (WUSB), or the like. Furthermore, for example, the communication unit 103 performs wired communication with the in-vehicle device 104 by using universal serial bus (USB), High-Definition Multimedia Interface (HDMI) (registered trademark), Mobile High-Definition Link (MHL), or the like via a connection terminal (not illustrated) (and a cable if necessary).

Moreover, for example, the communication unit 103 communicates, via a base station or an access point, with a device (for example, an application server or a control server) existing on an external network (for example, the Internet, a cloud network, or a proprietary network of a business operator). Furthermore, for example, the communication unit 103 communicates with a terminal existing in the vicinity of the system-installed car (for example, a terminal held by a pedestrian or installed in a store, or a machine type communication (MTC) terminal), using peer to peer (P2P) technology. Moreover, for example, the communication unit 103 performs V2X communication such as vehicle-to-vehicle communication, vehicle-to-infrastructure communication, vehicle (system-installed car)-to-home communication, and vehicle-to-pedestrian communication. Furthermore, for example, the communication unit 103 includes a beacon reception unit, receives a radio wave or an electromagnetic wave transmitted from a wireless station or the like installed on the road, and acquires information regarding, for example, a current location, a traffic jam, traffic regulation, or time required.

Examples of the in-vehicle device 104 includes a mobile device or a wearable device owned by the occupant, an information device carried in or attached to the system-installed car, and a navigation device which searches for a route to any destination.

The output control unit 105 controls output of various types of information to the occupant of the system-installed car or the outside thereof. For example, the output control unit 105 generates an output signal including at least one of visual information (for example, image data) or auditory information (for example, sound data) and supplies the output signal to the output unit 106, thereby controlling the output of the visual information and the auditory information from the output unit 106. Specifically, for example, the output control unit 105 composes pieces of image data imaged by different imaging devices of the data acquisition unit 102 to generate a bird's-eye view image, a panoramic image, or the like, and supplies an output signal including the generated image to the output unit 106. Furthermore, for example, the output control unit 105 generates sound data including a warning sound, a warning message, or the like for dangers such as collision, contact, and entry into a dangerous zone, and supplies an output signal including the generated sound data to the output unit 106.

The output unit 106 includes a device capable of outputting visual information or auditory information to the occupant of the system-installed car or the outside thereof. For example, the output unit 106 includes a display device, an instrument panel, an audio speaker, headphones, a wearable device such as a spectacle-type display worn by the occupant, a projector, and a lamp. In addition to devices having an ordinary display, the display device included in the output unit 106 may be a device which displays visual information in the driver's field of view, for example, a head-up display, a transmissive display, or a device having an augmented reality (AR) display function.

The driveline control unit 107 controls the driveline system 108 by generating various control signals and supplying the control signals to the driveline system 108. Furthermore, the driveline control unit 107 supplies control signals to the respective components other than the driveline system 108 as necessary to perform notification of a control state of the driveline system 108, and the like.

The driveline system 108 includes various devices related to the driveline of the system-installed car. For example, the driveline system 108 includes a drive force generator for generating a drive force such as an internal combustion engine, a drive motor, or the like, a drive force transmission mechanism for transmitting the drive force to the wheels, a steering mechanism which adjusts a steering angle, a braking device which generates a braking force, an antilock brake system (ABS), an electronic stability control (ESC), and an electric power steering device.

The body-related control unit 109 controls the body-related system 110 by generating various control signals and supplying the control signals to the body-related system 110. Furthermore, the body-related control unit 109 supplies control signals to the respective components other than the body-related system 110 as necessary to perform notification of a control state of the body-related system 110, and the like.

The body-related system 110 includes various body-related devices mounted on a vehicle body. For example, the body-related system 110 includes a keyless entry system, a smart key system, a power window device, a power seat, a steering wheel, an air conditioner, and various lamps (for example, a head lamp, a backup lamp, a brake lamp, a turn signal, and a fog lamp).

The storage unit 111 includes, for example, a magnetic storage device such as a read only memory (ROM), a random access memory (RAM), and a hard disc drive (HDD), a semiconductor storage device, an optical storage device, and a magneto-optical storage device. The storage unit 111 stores various programs, data, and the like used by the respective components of the vehicle control system 100. For example, the storage unit 111 stores map data of, for example, a three-dimensional high-precision map such as a dynamic map, a global map which is less accurate and covers a wider area than the high-precision map, and a local map including information regarding the surroundings of the system-installed car.

The autonomous driving control unit 112 performs control related to autonomous driving such as autonomous travelling or driving assistance. Specifically, for example, the autonomous driving control unit 112 performs cooperative control for the purpose of realizing functions of an advanced driver assistance system (ADAS) including collision avoidance or shock mitigation for the system-installed car, following driving based on a following distance, vehicle speed maintaining driving, a collision warning for the system-installed car, a lane departure warning for the system-installed car, or the like. Furthermore, for example, the autonomous driving control unit 112 performs cooperative control for the purpose of autonomous driving in which autonomous travelling is realized without depending on the operation of the driver, or the like. The autonomous driving control unit 112 includes a detection unit 131, a self-location estimation unit 132, a situation analysis unit 133, a planning unit 134, and an operation control unit 135.

The detection unit 131 detects various types of information necessary for controlling autonomous driving. The detection unit 131 includes an out-of-vehicle information detection unit 141, an in-vehicle information detection unit 142, and a vehicle state detection unit 143.

The out-of-vehicle information detection unit 141 performs a process of detecting information outside the system-installed car on the basis of data or signals from the respective components of the vehicle control system 100. For example, the out-of-vehicle information detection unit 141 performs processes of detecting, recognizing, and tracking an object around the system-installed car, and a process of detecting a distance to the object. Examples of the object to be detected include a vehicle, a person, an obstacle, a structure, a road, a traffic light, a traffic sign, and a road sign. Furthermore, for example, the out-of-vehicle information detection unit 141 performs a process of detecting an environment surrounding the system-installed car. Examples of the surrounding environment to be detected include weather, temperature, humidity, brightness, and a road surface condition. The out-of-vehicle information detection unit 141 supplies data indicating results of the detection process to the self-location estimation unit 132, a map analysis unit 151, a traffic rule recognizer 152, and a situation recognizer 153 of the situation analysis unit 133, and an emergency avoidance unit 171 of the operation control unit 135, and the like.

The in-vehicle information detection unit 142 performs a process of detecting information regarding the inside of the vehicle on the basis of data or signals from the respective components of the vehicle control system 100. For example, the in-vehicle information detection unit 142 performs processes of authenticating and recognizing a driver, a process of detecting a state of the driver, a process of detecting an occupant, a process of detecting an environment inside the vehicle, and the like. Examples of the state of the driver to be detected include a physical condition, an arousal level, a concentration level, a fatigue level, and a line-of-sight direction. Examples of the environment inside the vehicle to be detected include temperature, humidity, brightness, and odor. The in-vehicle information detection unit 142 supplies data indicating results of the detection process to the situation recognizer 153 of the situation analysis unit 133, the emergency avoidance unit 171 of the operation control unit 135, and the like.

The vehicle state detection unit 143 performs a process of detecting a state of the system-installed car on the basis of data or signals from the respective components of the vehicle control system 100. Examples of the state of the system-installed car to be detected include a speed, acceleration, a steering angle, the presence or absence of anomaly and details thereof, a state of a driving operation, a position and an inclination of a power seat, a door lock state, and states of other on-board devices. The vehicle state detection unit 143 supplies data indicating results of the detection process to the situation recognizer 153 of the situation analysis unit 133, the emergency avoidance unit 171 of the operation control unit 135, and the like.

The self-location estimation unit 132 performs a process of estimating a location and an attitude of the system-installed car, and the like, on the basis of data or signals from the respective components of the vehicle control system 100 such as the out-of-vehicle information detection unit 141 and the situation recognizer 153 of the situation analysis unit 133. Furthermore, the self-location estimation unit 132 generates a local map used for estimating a self-location (hereinafter, referred to as a self-location estimation map), as necessary. The self-location estimation map is, for example, a highly accurate map using a technique such as simultaneous localization and mapping (SLAM). The self-location estimation unit 132 supplies data indicating results of the estimation process to the map analysis unit 151, the traffic rule recognizer 152, and the situation recognizer 153 of the situation analysis unit 133, and the like. Furthermore, the self-location estimation unit 132 stores the self-location estimation map in the storage unit 111.

The situation analysis unit 133 performs a process of analyzing situations of the system-installed car and the surroundings thereof. The situation analysis unit 133 includes the map analysis unit 151, the traffic rule recognizer 152, the situation recognizer 153, and a situation prediction unit 154.

The map analysis unit 151 performs a process of analyzing various maps stored in the storage unit 111 using, as necessary, data or signals from the respective components of the vehicle control system 100 such as the self-location estimation unit 132 and the out-of-vehicle information detection unit 141, and builds a map containing information necessary for a process of autonomous driving. The map analysis unit 151 supplies the built map to the traffic rule recognizer 152, the situation recognizer 153, the situation prediction unit 154, and a route planning unit 161, an action planning unit 162, and an operation planning unit 163 of the planning unit 134, and the like.

The traffic rule recognizer 152 performs a process of recognizing traffic rules around the system-installed car on the basis of data or signals from the respective components of the vehicle control system 100 such as the self-location estimation unit 132, the out-of-vehicle information detection unit 141, and the map analysis unit 151. By this recognition process, for example, a location and a state of a traffic light around the system-installed car, details of traffic regulation around the system-installed car, a lane on which vehicle are allowed to travel, and the like are recognized. The traffic rule recognizer 152 supplies data indicating results of the recognition process to the situation prediction unit 154 and the like.

The situation recognizer 153 performs a process of recognizing a situation related to the system-installed car on the basis of data or signals from the respective components of the vehicle control system 100 such as the self-location estimation unit 132, the out-of-vehicle information detection unit 141, the in-vehicle information detection unit 142, the vehicle state detection unit 143, and the map analysis unit 151. For example, the situation recognizer 153 performs a process of recognizing a situation of the system-installed car, a situation around the system-installed car, a situation of the driver of the system-installed car, and the like. Furthermore, the situation recognizer 153 generates a local map used for recognizing the situation around the system-installed car (hereinafter referred to as a situation recognition map), as necessary. The situation recognition map

43          EP 3 901 652 A1          44

is, for example, an occupancy grid map.

Examples of the situation of the system-installed car to be recognized include a location, an attitude, movement (for example, a speed, acceleration, and a moving direction) of the system-installed car, and the presence or absence of anomaly and details thereof. Examples of the situation around the system-installed car to be recognized include the type and a location of a stationary object therearound, the type, a location, and movement (for example, a speed, acceleration, and a moving direction) of a moving object therearound, a configuration of a road therearound and a road surface condition, and weather, temperature, humidity, brightness, and the like of the surroundings. Examples of the state of the driver to be recognized include a physical condition, an arousal level, a concentration level, a fatigue level, movement of line-of-sight, and a driving operation.

The situation recognizer 153 supplies data indicating results of the recognition process (including the situation recognition map, as necessary) to the self-location estimation unit 132, the situation prediction unit 154, and the like. Furthermore, the situation recognizer 153 stores the situation recognition map in the storage unit 111.

The situation prediction unit 154 performs a process of predicting a situation related to the system-installed car on the basis of data or signals from the respective components of the vehicle control system 100 such as the map analysis unit 151, the traffic rule recognizer 152, and the situation recognizer 153. For example, the situation prediction unit 154 performs a process of predicting a situation of the system-installed car, a situation around the system-installed car, a situation of the driver, and the like.

Examples of the situation of the system-installed car to be predicted include a behavior of the system-installed car, the occurrence of an anomaly, and a travelable distance. Examples of the situation around the system-installed car to be predicted include a behavior of a moving object around the system-installed car, a change in a state of a traffic light, and a change in an environment such as the weather. Examples of the situation of the driver to be predicted include a behavior and a physical condition of the driver.

The situation prediction unit 154 supplies data indicating results of the prediction process together with data from the traffic rule recognizer 152 and the situation recognizer 153 to the route planning unit 161, the action planning unit 162, and the operation planning unit 163 of the planning unit 134, and the like.

The route planning unit 161 plans a route to a destination on the basis of data or signals from the respective components of the vehicle control system 100 such as the map analysis unit 151 and the situation prediction unit 154. For example, the route planning unit 161 sets a route from a current location to a specified destination on the basis of the global map. Furthermore, the route planning unit 161 changes the route as appropriate on the basis of, for example, situations of a traffic jam, an accident, traffic restriction, construction, and the like, and the physical condition of the driver. The route planning unit 161 supplies data indicating the planned route to the action planning unit 162 and the like.

The action planning unit 162 plans an action of the system-installed car in order to travel safely on the route planned by the route planning unit 161 within a planned time on the basis of data or signals from the respective components of the vehicle control system 100 such as the map analysis unit 151 and the situation prediction unit 154. The action planning unit 162 plans, for example, starting, stopping, a traveling direction (for example, forward, backward, left turn, right turn, and turnabout), a traveling lane, a traveling speed, and overtaking. The action planning unit 162 supplies data indicating the planned action of the system-installed car to the operation planning unit 163 and the like. The operation planning unit 163 plans an operation of the system-installed car for realizing the action planned by the action planning unit 162 on the basis of data or signals from the respective components of the vehicle control system 100 such as the map analysis unit 151 and the situation prediction unit 154. The operation planning unit 163 plans, for example, acceleration, deceleration, a travel track, and the like. The operation planning unit 163 supplies data indicating the planned operation of the system-installed car to an acceleration/deceleration control unit 172 and a direction control unit 173 of the operation control unit 135, and the like.

The operation control unit 135 controls an operation of the system-installed car. The operation control unit 135 includes the emergency avoidance unit 171, the acceleration/deceleration control unit 172, and the direction control unit 173.

The emergency avoidance unit 171 performs a process of detecting an emergency such as collision, contact, entry into a dangerous zone, anomaly of the driver, and anomaly of the vehicle, on the basis of the detection results of the out-of-vehicle information detection unit 141, the in-vehicle information detection unit 142, and the vehicle state detection unit 143. In a case where the emergency avoidance unit 171 detects the occurrence of an emergency, the emergency avoidance unit 171 plans the operation of the system-installed car for avoiding an emergency such as a sudden stop or a sharp turn. The emergency avoidance unit 171 supplies data indicating the planned operation of the system-installed car to the acceleration/deceleration control unit 172, the direction control unit 173, and the like.

The acceleration/deceleration control unit 172 performs acceleration/deceleration control for realizing the operation of the system-installed car planned by the operation planning unit 163 or the emergency avoidance unit 171. For example, the acceleration/deceleration control unit 172 calculates a control target value of the drive force generator or the braking device for realizing planned acceleration, deceleration, or sudden stop, and

23

supplies a control command indicating the calculated control target value to the driveline control unit 107.

The direction control unit 173 performs direction control for realizing the operation of the system-installed car planned by the operation planning unit 163 or the emergency avoidance unit 171. For example, the direction control unit 173 calculates a control target value of a steering mechanism for realizing a travel track or a sharp turn planned by the operation planning unit 163 or the emergency avoidance unit 171, and supplies a control command indicating the calculated control target value to the driveline control unit 107.

In the vehicle control system 100 described above, the sensor unit 40 indicated in the present embodiment corresponds to the data acquisition unit 102. Furthermore, the signal processing unit 50-1 (50-3) is provided in the out-of-vehicle information detection unit 141. In a case where the out-of-vehicle information detection unit 141 performs the processes of detecting, recognizing, and tracking an object around the system-installed car, and the process of detecting a distance to the object on the basis of data acquired by the data acquisition unit 102, and the like, the out-of-vehicle information detection unit 141 can correct temporal misalignment in detection information output from the plurality of sensors by using the time difference correction amount set by the calibration process, which makes it possible to perform various processes based on the acquired data accurately without being affected by the temporal misalignment in the data.

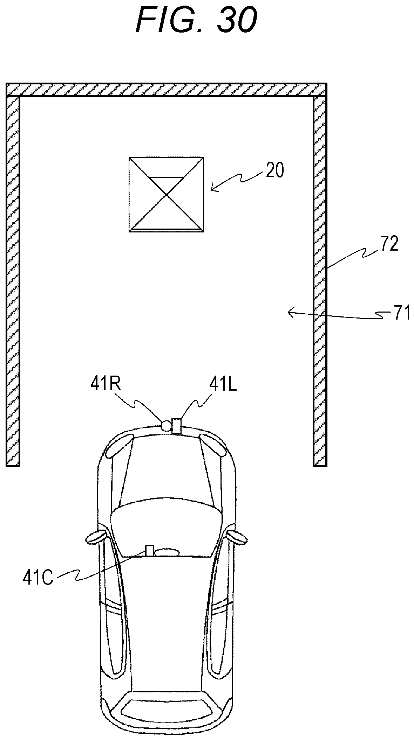

Fig. 30 exemplifies the arrangement of the calibration target in a case where a calibration process is performed. The calibration target 20 is installed on a floor 71, which is a radio wave absorber, in a region surrounded by a wall 72 as a radio wave absorber. The imaging unit 41C is attached to an upper portion of a front window of a vehicle 80, for example, and the radar unit 41R and the lidar unit 41L are provided at a position of a front grill of the vehicle 80, for example. Here, in a case of performing calibration, states of the calibration target 20 are switched as described above, and the imaging unit 41C and the radar unit 41R or the lidar unit 41L each generate a detection signal indicating the state of the calibration target 20. The out-of-vehicle information detection unit 141 provided in the vehicle 80 detects temporal misalignment between the detection signals of the sensors on the basis of the detection signal to set or update a time difference correction amount. Thereafter, the vehicle 80 corrects the temporal misalignment between the detection signals on the basis of the time difference correction amount, and performs various data processes.

If calibration is performed using the calibration target as described above, even if a characteristic change, replacement, or the like of the data acquisition unit 102 occurs and thus the time difference between the detection signals generated by the plurality of sensors changes, it is possible to correct the time difference between the detection signals easily.

Note that the arrangement of the calibration target illustrated in Fig. 30 is merely an example, and the calibration target may be used, for example, on a road on which the vehicle 80 travels, for example, an intersection, and the calibration may be performed, for example, while the vehicle 80 is stopped at a traffic light or the like.

A series of processes described herein can be executed by hardware, software, or a combined configuration of both. In a case of executing a process by software, a program in which a processing sequence is recorded is executed after being installed on a memory in a computer incorporated in dedicated hardware. Alternatively, the program can be executed after being installed on a general-purpose computer which can execute various processes.

For example, the program can be recorded in advance in a hard disk, a solid state drive (SSD), or a read only memory (ROM) as a recording medium. Alternatively, the program can be temporarily or permanently stored (recorded) in a removable recording medium such as a flexible disk, a compact disc read only memory (CD-ROM), a magneto-optical (MO) disk, a digital versatile disc (DVD), a Blu-Ray Disc (BD) (registered trademark), a magnetic disk, and a semiconductor memory card. Such a removable recording medium can be provided as so-called package software.

Furthermore, other than installation of the program on the computer from a removable recording medium, the program may be transferred wirelessly or by wire from a download site to the computer via a network such as a local area network (LAN) or the Internet. The computer can receive the program thus transferred and install the program on a recording medium such as a hard disk incorporated therein.

Note that the effects described herein are merely examples and are not limited, and there may be additional effects not described. Furthermore, the present technology should not be construed as being limited to the embodiments of the technology described above. The embodiments of this technology disclose the present technology in a form of examples, and it is obvious that a person skilled in the art can modify or substitute the embodiments without departing from the gist of the present technology. That is, in order to determine the gist of the present technology, claims should be taken into consideration.

Furthermore, the calibration apparatus of the present technology can have the following configuration.

(1) A calibration apparatus including:

a state detection unit that detects a state of a calibration target by using detection signals each generated by one of a plurality of sensors and indicating detection results of the calibration target; and
a time difference correction amount setting unit that calculates a time difference between the detection signals each generated by one of the sensors by using state detection results of the calibration target obtained by the state detection unit, and sets a time difference correction amount on the basis of a calculation result.

(2) The calibration apparatus according to (1), in which the plurality of sensors includes at least an active sensor.

(3) The calibration apparatus according to (2), in which the plurality of sensors includes the active sensor and a passive sensor.

(4) The calibration apparatus according to (2), in which the plurality of sensors is constituted by including sensors each identical to the active sensor.

(5) The calibration apparatus according to any one of (2) to (4), in which a radar and/or a lidar is used as the active sensor.

(6) The calibration apparatus according to any one of (1) to (5), in which with the use of any one of the detection signals each generated by one of the plurality of sensors as reference, the time difference correction amount setting unit calculates a time difference with respect to the detection signal as reference by using state detection results of respective frames of the detection signal.

(7) The calibration apparatus according to (6), in which the time difference correction amount setting unit calculates a difference in frame numbers when there occurs an equal change in the state of the calibration target by using the state detection results, and defines the difference as the time difference.

(8) The calibration apparatus according to (6) or (7), in which the detection signals each generated by one of the plurality of sensors indicate detection results when states of the calibration target are randomly switched.

(9) The calibration apparatus according to any one of (6) to (8), further including a synchronization processing unit that corrects, by using the time difference correction amount, the time difference in a detection signal for which the time difference has been calculated.

(10) The calibration apparatus according to (9), in which the time difference indicates a difference in frame numbers when there occurs an equal change in the state of the calibration target, and the synchronization processing unit outputs a detection signal corrected with the time difference correction amount with frame numbers thereof matched with those of the detection signal as reference.

REFERENCE SIGNS LIST

10 Calibration system
20, 20e Calibration target
21, 21a, 21b, 21c Reflector
22, 22a, 22b, 22c Radio wave absorber
23 Indicator
25 Rotating body
26 Rotary drive unit
27 Support post
28 Pedestal
30, 30-1, 30-3 Information processing apparatus
40, 40-1, 40-3 Sensor unit
41C Imaging unit
41L Lidar unit
41R Radar unit
50-1, 50-3 Signal processing unit
51C Camera signal processing unit
51L Lidar signal processing unit
51R Radar signal processing unit
52 Synchronization extraction unit
53, 53R, 53L Synchronization processing unit
55, 56 Recognizer
60, 60-1, 60-3 Calibration unit
61, 61C, 61R, 61L State detection unit
62C, 62R, 62L Frame number extraction unit
65, 65-1, 65-3 Time difference correction amount setting unit

**Claims**

1. A calibration apparatus comprising:

a state detection unit that detects a state of a calibration target by using detection signals each generated by one of a plurality of sensors and indicating detection results of the calibration target; and
a time difference correction amount setting unit that calculates a time difference between the detection signals each generated by one of the sensors by using state detection results of the calibration target obtained by the state detection unit, and sets a time difference correction amount on a basis of a calculation result.

2. The calibration apparatus according to claim 1, wherein the plurality of sensors includes at least an active sensor.

3. The calibration apparatus according to claim 2, wherein the plurality of sensors includes the active sensor and a passive sensor.

4. The calibration apparatus according to claim 2, wherein the plurality of sensors is constituted by including sensors each identical to the active sensor.

5. The calibration apparatus according to claim 2, wherein a radar and/or a lidar is used as the active sensor.

6. The calibration apparatus according to claim 1, wherein with use of any one of the detection signals each generated by one of the plurality of sensors as reference, the time difference correction amount setting unit calculates a time difference with respect to the detection signal as reference by using state detection results of respective frames of the detection signal.

7. The calibration apparatus according to claim 6, wherein the time difference correction amount setting unit calculates a difference in frame numbers when there occurs an equal change in the state of the calibration target by using the state detection results, and defines the difference as the time difference.

8. The calibration apparatus according to claim 6, wherein the detection signals each generated by one of the plurality of sensors indicate detection results when states of the calibration target are randomly switched.

9. The calibration apparatus according to claim 6, further comprising:
a synchronization processing unit that corrects, by using the time difference correction amount, the time difference in a detection signal for which the time difference has been calculated.

10. The calibration apparatus according to claim 9,

wherein the time difference indicates a difference in frame numbers when there occurs an equal change in the state of the calibration target, and
the synchronization processing unit outputs a detection signal corrected with the time difference correction amount with frame numbers thereof matched with those of the detection signal as reference.

11. A calibration method comprising:

detecting a state of a calibration target by a state detection unit by using detection signals each generated by one of a plurality of sensors and indicating detection results of the calibration target; and
calculating a time difference between the detection signals each generated by one of the sensors by using state detection results of the calibration target obtained by the state detection unit, and setting a time difference correction amount by a time difference correction amount setting unit on a basis of a calculation result.

12. A program that causes a computer to execute calibration of detection signals each generated by one of a plurality of sensors and indicating detection results of a calibration target, the program causing the computer to execute:

a procedure for detecting a state of the calibration target by using the detection signals; and
a procedure for calculating a time difference between the detection signals each generated by one of the sensors on a basis of state detection results of the calibration target, and setting a time difference correction amount on a basis of a calculation result.

13. A calibration system comprising:

a sensor unit that generates detection signals each generated by one of a plurality of sensors and indicating detection results of a calibration target;
a state detection unit that detects a state of the calibration target by using the detection signals of respective sensors generated by the sensor unit;
a time difference correction amount setting unit that calculates a time difference between the detection signals each generated by one of the sensors by using state detection results of the calibration target obtained by the state detection unit, and sets a time difference correction amount on a basis of a calculation result; and
a synchronization processing unit that corrects the time difference between the detection signals by using the time difference correction amount set by the time difference correction amount setting unit.

14. A calibration target comprising:
a characteristic switching unit capable of performing switching to a different reflection characteristic state.

15. The calibration target according to claim 14, further comprising:
an indicator that indicates state information indicating a state of the reflection characteristic.

16. The calibration target according to claim 14, wherein the characteristic switching unit includes a target having a predetermined reflection characteristic and an antireflection portion movably provided at a front surface of the target, and moves the antireflection portion in a predetermined period or a random period to switch the reflection characteristic to a different state.

17. The calibration target according to claim 14, wherein the characteristic switching unit includes a plurality of targets having different reflection characteristics and antireflection portions movably provided at front surfaces of the plurality of targets, selects one target of which the antireflection portion has been moved from the front surface thereof, and switches the target to be selected in a predetermined period or a random period.

18. The calibration target according to claim 14, wherein the characteristic switching unit includes a rotating body in which a plurality of targets having different reflection characteristics is provided in a rotation direction, and a rotary drive unit that rotates the rotating body to switch a reflection characteristic to a different state in a predetermined period.

# FIG. 1

EP 3 901 652 A1

FIG. 2

SENSOR UNIT (40)

STATE DETECTION UNIT (61)

TIME DIFFERENCE CORRECTION AMOUNT SETTING UNIT (65)

(60)

# FIG. 3

START

**ST1** START OPERATION OF CALIBRATION TARGET

**ST2** PERFORM SETTING TO CALIBRATION MODE

**ST3** SET DETERMINATION TARGET PERIOD

**ST4** PERFORM DETECTION SIGNAL ACQUISITION PROCESS

**ST5** PERFORM TIME DIFFERENCE
CORRECTION AMOUNT SETTING PROCESS

END

## FIG. 4

EP 3 901 652 A1

## FIG. 5

```
        ┌─────────────────────────────────┐
        │  START OF DETECTION SIGNAL      │
        │      ACQUISITION PROCESS        │
        └─────────────────────────────────┘
                        │
ST11 ┌──────────────────▼──────────────────┐
     │        INITIALIZE IMAGING UNIT       │
     └──────────────────┬──────────────────┘
                        │
ST12 ┌──────────────────▼──────────────────┐
     │        INITIALIZE LASER UNIT         │
     └──────────────────┬──────────────────┘
                        │
ST13 ┌──────────────────▼──────────────────┐
     │    START OPERATION OF IMAGING UNIT   │
     └──────────────────┬──────────────────┘
                        │
ST14 ┌──────────────────▼──────────────────┐
     │   START OPERATION OF RADAR UNIT IN   │
     │   SYNCHRONIZATION WITH IMAGING UNIT  │
     └──────────────────┬──────────────────┘
                        │◄──────────────────┐
ST15 ┌──────────────────▼──────────────────┐│
     │   PERFORM STATE DETECTION PROCESS   ││
     │      OF CALIBRATION TARGET          ││
     └──────────────────┬──────────────────┘│
                        │                    │
ST16                    ▼                    │
            ◇───────────────────────◇   No  │
           ╱    HAS DETECTION SIGNAL   ╲─────┘
          ╱  BEEN GENERATED FOR DETERMINATION
          ╲      TARGET PERIOD?       ╱
            ◇───────────────────────◇
                        │ Yes
                        ▼
              ┌──────────────────┐
              │      RETURN       │
              └──────────────────┘
```

## FIG. 6

```
        ┌─────────────────────────────────┐
        │  START OF TIME DIFFERENCE        │
        │  CORRECTION AMOUNT SETTING       │
        │  PROCESS                         │
        └─────────────────────────────────┘
                       │
                       ▼
ST21    ┌─────────────────────────────────┐
        │  CALCULATE TIME DIFFERENCE ER    │
        └─────────────────────────────────┘
                       │
                       ▼
ST22         ◇ HAS CALCULATION OF              No    ┌────────────────────────┐ ST23
         TIME DIFFERENCE IN DETERMINATION ─────────▶ │ PERFORM UPDATE PROCESS │
            TARGET PERIOD BEEN                        │ OF TIME DIFFERENCE     │
               COMPLETED? ◇                           │ CALCULATION TARGET     │
                       │ Yes                          │ FRAME                  │
                       ▼                              └────────────────────────┘
ST24         ◇ ARE TIME                    No
             DIFFERENCES ER ──────────────────┐
                EQUAL? ◇                       │
                       │ Yes                    ▼
                       ▼                    ┌────────────────────────┐ ST27
ST25    ┌──────────────────────┐           │ CAUSE CALIBRATION      │
        │ SET TIME DIFFERENCE  │           │ SUCCESS FLAG TO BE NOT │
        │ CORRECTION AMOUNT EC │           │ SET                    │
        └──────────────────────┘           └────────────────────────┘
                       │                         │
                       ▼                         │
ST26    ┌──────────────────────────┐             │
        │ SET CALIBRATION SUCCESS  │             │
        │ FLAG                     │             │
        └──────────────────────────┘             │
                       │◀────────────────────────┘
                       ▼
             ┌──────────────────┐
             │     RETURN       │
             └──────────────────┘
```

## FIG. 7

(a) WS ‾‾\_OPEN_/‾‾CLOSE‾‾\_OPEN_/‾‾CLOSE‾‾\_OPEN_/‾‾CLOSE‾‾

(b) SC — 1 (OPEN) — 2 (CLOSE) — 3 (OPEN) — 4 (CLOSE) — 5 (OPEN) — 6 (CLOSE) —

(c) SR — 1 (OPEN) — 2 (CLOSE) — 3 (OPEN) — 4 (CLOSE) — 5 (OPEN) — 6 (CLOSE) —

## FIG. 8

(a) WS — OPEN | CLOSE | OPEN | CLOSE | OPEN | CLOSE

(b) SC — 1 (OPEN) | 2 (CLOSE) | 3 (OPEN) | 4 (CLOSE) | 5 (OPEN) | 6 (CLOSE)

ER=1 | ER=1 | ER=1 | ER=1 | ER=1

(c) SR — 1 (CLOSE) | 2 (OPEN) | 3 (CLOSE) | 4 (OPEN) | 5 (CLOSE)

EP 3 901 652 A1

*FIG. 9*

(a) WS    OPEN   CLOSE   OPEN   CLOSE   OPEN   CLOSE

(b) SC    1 (OPEN)   2 (CLOSE)   3 (OPEN)   4 (CLOSE)   5 (OPEN)   6 (CLOSE)

(c) SRh    2 (CLOSE)   3 (CLOSE)   4 (CLOSE)   5 (CLOSE)   6 (CLOSE)

EP 3 901 652 A1

# FIG. 10

(a) WS    OPEN    CLOSE    OPEN    CLOSE    OPEN    CLOSE

(b) SC

(c) SR

FIG. 11

EP 3 901 652 A1

# FIG. 12

EP 3 901 652 A1

# FIG. 13

## FIG. 14

EP 3 901 652 A1

# FIG. 15

| | | | | | | | |
|---|---|---|---|---|---|---|---|
| (a) WSa | OPEN | CLOSE | | OPEN | CLOSE | | |

(b) WSb  CLOSE  OPEN  CLOSE  OPEN  CLOSE

(c) WSc  CLOSE  OPEN  CLOSE  OPEN

(d) DS  La  Lb  Lc  La  Lb  Lc

(e) SC  1 (La)  2 (Lb)  3 (Lc)  4 (La)  5 (Lb)  6 (Lc)

(f) SR  1 (La)  2 (Lb)  3 (Lc)  4 (La)  5 (Lb)  6 (Lc)

# FIG. 16

(a) WSa ⟍ OPEN ⟍ CLOSE ⟋ OPEN ⟍ CLOSE ⟋

(b) WSb CLOSE ⟋ OPEN ⟍ CLOSE ⟋ OPEN ⟍ CLOSE

(c) WSc ⟍ CLOSE ⟋ OPEN ⟍ CLOSE ⟋ OPEN ⟍

(d) DS ⟩⟨ La ⟩⟨ Lb ⟩⟨ Lc ⟩⟨ La ⟩⟨ Lb ⟩⟨ Lc ⟩⟨

(e) SC ⟩⟨ 1 (La) ⟩⟨ 2 (Lb) ⟩⟨ 3 (Lc) ⟩⟨ 4 (La) ⟩⟨ 5 (Lb) ⟩⟨ 6 (Lc) ⟩⟨

ER=1      ER=1      ER=1      ER=1      ER=1

(f) SR ⟩⟨ ⟩⟨ 1 (Lb) ⟩⟨ 2 (Lc) ⟩⟨ 3 (La) ⟩⟨ 4 (Lb) ⟩⟨ 5 (Lc) ⟩⟨

EP 3 901 652 A1

## FIG. 17

(a) WSa ⟋ OPEN ⟍___ CLOSE ___⟋ OPEN ⟍___ CLOSE ___⟋

(b) WSb ___ CLOSE ___⟋ OPEN ⟍___ CLOSE ___⟋ OPEN ⟍___ CLOSE

(c) WSc ⟍___ CLOSE ___⟋ OPEN ⟍___ CLOSE ___⟋ OPEN ⟍___

(d) DS ⟩ La ⟨⟩ Lb ⟨⟩ Lc ⟨⟩ La ⟨⟩ Lb ⟨⟩ Lc ⟨

(e) SC ⟩ 1 (La) ⟨⟩ 2 (Lb) ⟨⟩ 3 (Lc) ⟨⟩ 4 (La) ⟨⟩ 5 (Lb) ⟨⟩ 6 (Lc) ⟨

(f) SRh ⟩ ⟨⟩ 2 (Lb) ⟨⟩ 3 (Lc) ⟨⟩ 4 (La) ⟨⟩ 5 (Lb) ⟨⟩ 6 (Lc) ⟨

EP 3 901 652 A1

# FIG. 18

(a) WSa — OPEN | CLOSE | OPEN | CLOSE

(b) WSb — CLOSE | OPEN | CLOSE | OPEN | CLOSE

(c) WSc — CLOSE | OPEN | CLOSE | OPEN

(d) DS — La | Lb | Lc | La | Lb | Lc

(e) SC — 1 (Lc) | 2 (La) | 3 (La) | 4 (La) | 5 (La) | 6 (Lb) | 7 (Lb) | 8 (Lb) | 9 (Lb) | 10 (Lc) | 11 (Lc) | 12 (Lc) | 13 (Lc) | 14 (La) | 15 (La) | 16 (La) | 17 (La) | 18 (Lb) | 19 (Lb) | 20 (Lb) | 21 (Lb) | 22 (Lc) | 23 (Lc) | 24 (Lc) | 25 (Lc)

(f) SR — 1 (Lc) | 2 (La) | 3 (La) | 4 (La) | 5 (La) | 6 (Lb) | 7 (Lb) | 8 (Lb) | 9 (Lb) | 10 (Lc) | 11 (Lc) | 12 (Lc) | 13 (Lc) | 14 (La) | 15 (La) | 16 (La) | 17 (La) | 18 (Lb) | 19 (Lb) | 20 (Lb) | 21 (Lb) | 22 (Lc) | 23 (Lc) | 24 (Lc) | 25 (Lc)

EP 3 901 652 A1

# FIG. 19

(a) WSa

| OPEN | CLOSE | OPEN | CLOSE |

(b) WSb

| CLOSE | OPEN | CLOSE | OPEN | CLOSE |

(c) WSc

| CLOSE | OPEN | CLOSE | OPEN |

(d) DS

| La | Lb | Lc | La | Lb | Lc |

(e) SC

1 (Lc) / 2 (La) / 3 (La) / 4 (La) / 5 (La) / 6 (Lb) / 7 (Lb) / 8 (Lb) / 9 (Lb) / 10 (Lc) / 11 (Lc) / 12 (Lc) / 13 (Lc) / 14 (La) / 15 (La) / 16 (La) / 17 (La) / 18 (Lb) / 19 (Lb) / 20 (Lb) / 21 (Lb) / 22 (Lc) / 23 (Lc) / 24 (Lc) / 25 (Lc)

ER=2    ER=2    ER=2    ER=2    ER=2

(f) SR

1 (La) / 2 (La) / 3 (La) / 4 (Lb) / 5 (Lb) / 6 (Lb) / 7 (Lb) / 8 (Lc) / 9 (Lc) / 10 (Lc) / 11 (Lc) / 12 (La) / 13 (La) / 14 (La) / 15 (La) / 16 (Lb) / 17 (Lb) / 18 (Lb) / 19 (Lb) / 20 (Lc) / 21 (Lc) / 22 (Lc) / 23 (Lc)

EP 3 901 652 A1

FIG. 20

EP 3 901 652 A1

FIG. 21

EP 3 901 652 A1

*FIG. 22*

```
        ┌─────────────────────────────┐
        │  START OF TIME DIFFERENCE   │
        │ CORRECTION AMOUNT SETTING   │
        │          PROCESS            │
        └─────────────────────────────┘
                      │
                      ▼
ST31      ┌─────────────────────────┐
          │     CALCULATE TIME      │
          │  DIFFERENCES ERr AND ERl │
          └─────────────────────────┘
                      │
                      ▼
ST32            ╱───────────╲
          ╱ HAS CALCULATION OF ╲      No          ST33
         ╱ TIME DIFFERENCE IN    ╲──────────►┌──────────────────────┐
         ╲ DETERMINATION TARGET  ╱           │  PERFORM UPDATE       │
          ╲ PERIOD BEEN          ╱           │  PROCESS OF TIME      │
           ╲ COMPLETED?         ╱            │  DIFFERENCE           │
            ╲─────────────────╱              │  CALCULATION TARGET   │
                   │ Yes                      │  FRAME                │
                   ▼                          └──────────────────────┘
ST34          ╱──────────╲
          ╱  ARE TIME    ╲    No                          ST37
         ╱ DIFFERENCES ERr ╲─────────────►┌──────────────────────────┐
         ╲    EQUAL?       ╱               │  CAUSE RADAR UNIT         │
          ╲──────────────╱                 │  CALIBRATION SUCCESS      │
                │ Yes                       │  FLAG TO BE NOT SET       │
                ▼                           └──────────────────────────┘
ST35    ┌─────────────────────┐
        │  SET TIME DIFFERENCE │
        │ CORRECTION AMOUNT ECr│
        └─────────────────────┘
                │
                ▼
ST36    ┌─────────────────────┐
        │   SET RADAR UNIT     │
        │ CALIBRATION SUCCESS  │
        │        FLAG          │
        └─────────────────────┘
                │
                ▼
ST38          ╱──────────╲
          ╱  ARE TIME    ╲    No                          ST41
         ╱ DIFFERENCES ERl ╲─────────────►┌──────────────────────────┐
         ╲    EQUAL?       ╱               │  CAUSE LIDAR UNIT         │
          ╲──────────────╱                 │  CALIBRATION SUCCESS      │
                │ Yes                       │  FLAG TO BE NOT SET       │
                ▼                           └──────────────────────────┘
ST39    ┌─────────────────────┐
        │  SET TIME DIFFERENCE │
        │ CORRECTION AMOUNT ECl│
        └─────────────────────┘
                │
                ▼
ST40    ┌─────────────────────┐
        │   SET LIDAR UNIT     │
        │ CALIBRATION SUCCESS  │
        │        FLAG          │
        └─────────────────────┘
                │
                ▼
        ┌─────────────┐
        │   RETURN    │
        └─────────────┘
```

# FIG. 23

(a) WSa ⟍‾ OPEN ‾⟍____ CLOSE ____⟍‾ OPEN ‾⟍____ CLOSE ____⟋‾

(b) WSb ___ CLOSE ___⟍‾ OPEN ‾⟍____ CLOSE ____⟍‾ OPEN ‾⟍___ CLOSE

(c) WSc ‾⟍____ CLOSE ____⟍‾ OPEN ‾⟍____ CLOSE ____⟍‾ OPEN ‾⟍_

(d) DS ⟩⟨ La ⟩⟨ Lb ⟩⟨ Lc ⟩⟨ La ⟩⟨ Lb ⟩⟨ Lc ⟩⟨

(e) SC ⟩⟨ 1 (La) ⟩⟨ 2 (Lb) ⟩⟨ 3 (Lc) ⟩⟨ 4 (La) ⟩⟨ 5 (Lb) ⟩⟨ 6 (Lc) ⟩⟨

(f) SR ⟩⟨ 1 (La) ⟩⟨ 2 (Lb) ⟩⟨ 3 (Lc) ⟩⟨ 4 (La) ⟩⟨ 5 (Lb) ⟩⟨ 6 (Lc) ⟩⟨

(g) SL ⟩⟨ 1 (La) ⟩⟨ 2 (Lb) ⟩⟨ 3 (Lc) ⟩⟨ 4 (La) ⟩⟨ 5 (Lb) ⟩⟨ 6 (Lc) ⟩⟨

EP 3 901 652 A1

## FIG. 24

(a) WSa ⟋ OPEN ⟍___ CLOSE ___⟋ OPEN ⟍___ CLOSE ___⟋

(b) WSb ___ CLOSE ___⟋ OPEN ⟍___ CLOSE ___⟋ OPEN ⟍___ CLOSE

(c) WSc ⟍___ CLOSE ___⟋ OPEN ⟍___ CLOSE ___⟋ OPEN ⟍___

(d) DS ⟩⟨ La ⟩⟨ Lb ⟩⟨ Lc ⟩⟨ La ⟩⟨ Lb ⟩⟨ Lc ⟩⟨

(e) SC ⟩⟨ 1 (La) ⟩⟨ 2 (Lb) ⟩⟨ 3 (Lc) ⟩⟨ 4 (La) ⟩⟨ 5 (Lb) ⟩⟨ 6 (Lc) ⟩⟨

ERr=2   ERr=2   ERr=2   ERr=2

(f) SR ⟩⟨ ⟩⟨ ⟩⟨ 1 (Lc) ⟩⟨ 2 (La) ⟩⟨ 3 (Lb) ⟩⟨ 4 (Lc) ⟩⟨

ERl=1   ERl=1   ERl=1   ERl=1   ERl=1

(g) SL ⟩⟨ ⟩⟨ 1 (Lb) ⟩⟨ 2 (Lc) ⟩⟨ 3 (La) ⟩⟨ 4 (Lb) ⟩⟨ 5 (Lc) ⟩

EP 3 901 652 A1

# FIG. 25

(a) WSa OPEN CLOSE OPEN CLOSE

(b) WSb CLOSE OPEN CLOSE OPEN CLOSE

(c) WSc CLOSE OPEN CLOSE OPEN

(d) DS — La — Lb — Lc — La — Lb — Lc —

(e) SC — 1 (La) — 2 (Lb) — 3 (Lc) — 4 (La) — 5 (Lb) — 6 (Lc) —

(f) SRh — 3 (Lc) — 4 (La) — 5 (Lb) — 6 (Lc) —

(g) SLh — 2 (Lb) — 3 (Lc) — 4 (La) — 5 (Lb) — 6 (Lc) —

EP 3 901 652 A1

FIG. 26

EP 3 901 652 A1

# FIG. 27

(a)

(b)

EP 3 901 652 A1

# FIG. 28

EP 3 901 652 A1

(a) WS

OPEN  CLOSE  OPEN  CLOSE  OPEN  CLOSE

(b) SC

| 1 (O) | 2 (O) | 3 (O) | 4 (O) | 5 (C) | 6 (C) | 7 (C) | 8 (C) | 9 (O) | 10 (O) | 11 (O) | 12 (O) | 13 (C) | 14 (C) | 15 (C) | 16 (C) | 17 (O) | 18 (O) | 19 (O) | 20 (O) | 21 (C) | 22 (C) | 23 (C) | 24 (C) |

ER=8        ER=0

(c) SR

| 1 (O) | 2 (O) | 3 (O) | 4 (O) | 5 (C) | 6 (C) | 7 (C) | 8 (C) | 9 (O) | 10 (O) | 11 (O) | 12 (O) | 13 (C) | 14 (C) | 15 (C) | 16 (C) |

# FIG. 29

# FIG. 30

## INTERNATIONAL SEARCH REPORT

| International application No. |
| --- |
| PCT/JP2019/039994 |

**A. CLASSIFICATION OF SUBJECT MATTER**
Int.Cl. G01S7/40(2006.01)i, G01S13/86(2006.01)i, G01S13/87(2006.01)i,
G01S13/93(2006.01)n

According to International Patent Classification (IPC) or to both national classification and IPC

**B. FIELDS SEARCHED**

Minimum documentation searched (classification system followed by classification symbols)
Int.Cl. G01S7/00-G01S7/64, G01S13/00-G01S17/95

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2018-082313 A (HONDA MOTOR CO., LTD.) 24 May 2018, claim 7, paragraphs [0010]-[0012], [0016], [0035]-[0042], fig. 7 | 1-5, 11-18<br>6-10 |
| Y | JP 2018-097688 A (DENSO CORPORATION) 21 June 2018, claim 6, paragraphs [0011]-[0013], [0038]-[0040], fig. 6 | 6-10 |
| P, X | WO 2019/097731 A1 (MITSUBISHI ELECTRIC CORPORATION) 23 May 2019, paragraphs [0015]-[0039], [0188]-[0208], fig. 1, 2, 17A, 17B | 1-13 |

☒ Further documents are listed in the continuation of Box C.    ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 18.11.2019 | 03.12.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/039994 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P, A | US 2019/0072646 A1 (VALEO RADAR SYSTEMS, INC.) 07 March 2019, paragraph [0044] | 1-13 |
| A | US 4972192 A (BRUDER, J. A.) 20 November 1990, fig. 1a-4d, column 3, line 25 to column 5, line 4 | 14-18 |

Form PCT/ISA/210 (continuation of second sheet) (January 2015)

**INTERNATIONAL SEARCH REPORT**
Information on patent family members

International application No.

PCT/JP2019/039994

| | | |
|---|---|---|
| JP 2018-082313 A | 24 May 2018 | (Family: none) |
| JP 2018-097688 A | 21 June 2018 | US 2018/0164424 A1 14 June 2018 claims 9-10, paragraphs [0028]-[0030], [0059]-[0063], fig. 6 |
| WO 2019/097731 A1 | 23 May 2019 | (Family: none) |
| US 2019/0072646 A1 | 07 March 2019 | WO 2019/050639 A1  14 March 2019 |
| US 4972192 A | 20 November 1990 | (Family: none) |

Form PCT/ISA/210 (patent family annex) (January 2015)

**REFERENCES CITED IN THE DESCRIPTION**

**Patent documents cited in the description**

- JP 2007218738 A